# EUROPEAN PATENT APPLICATION

(11) **EP 4 686 257 A1**
(43) Date of publication of application: **28.01.2026**
(21) Application number: 24784153.9
(22) Date of filing: 28.03.2024
(51) Int. Cl.: H04W 36/00

(54) **COMMUNICATION METHOD AND COMMUNICATION APPARATUS**

(30) Priority: 06.04.2023 CN 202310396692
(71) Applicant: Huawei Technologies Co., Ltd., Shenzhen, Guangdong 518129 (CN)
(72) Inventor: YOU, Chunhua, Shenzhen, Guangdong 518129 (CN); FAN, Qiang, Shenzhen, Guangdong 518129 (CN); ZHANG, Hongzhuo, Shenzhen, Guangdong 518129 (CN)
(74) Representative: Goddar, Heinz J.
(86) International application number: PCT/CN2024/084279
(87) International publication number: WO 2024/208068

(57) **Abstract**

This application provides a communication method and a communication apparatus, which are applied to the field of L1/L2 triggered mobility. The method includes: A first network device receives a contention-free random access preamble of a first candidate cell; and the first network device sends an identifier of a target cell of a switch and timing advance (timing advance, TA) information of the target cell to a terminal device, where the target cell is a second candidate cell, and the TA information of the target cell is determined based on the contention-free random access preamble of the first candidate cell. Specifically, a candidate cell for which the terminal device initiates a random access procedure and a candidate cell that the terminal device switches to and accesses may be two different candidate cells, and TA information of the candidate cell that the terminal device switches to and accesses may be determined based on the candidate cell for which the terminal device initiates the random access procedure. In this way, in this application, a quantity of random access procedures that need to be initiated by the terminal device can be reduced.

## Description

This application claims priority to Chinese Patent Application No. 202310396692.5, filed with the China National Intellectual Property Administration on April 6, 2023 and entitled "COMMUNICATION METHOD AND COMMUNICATION APPARATUS", which is incorporated herein by reference in its entirety.

### TECHNICAL FIELD

This application relates to the field of communication technologies, and more specifically, to a communication method and a communication apparatus.

### BACKGROUND

In the communication field, movement of a terminal device triggers a cell switch in a plurality of pre-configured candidate cells, to be specific, a serving cell of the terminal device switches to any one of the plurality of candidate cells. A cell switch decision is performed by a distributed unit (distributed unit, DU). In short, the terminal device reports a measurement report of a candidate cell to the DU, and the DU determines, based on the measurement report of the candidate cell, the candidate cell as a target cell of a switch, and indicates, in a cell switch command, the serving cell of the terminal device to switch to the target cell.

Currently, before receiving the cell switch command, the terminal device initiates a random access procedure in each of the plurality of candidate cells, to obtain timing advances (timing advance, TA) of the plurality of candidate cells. The TA of the candidate cell is used by the terminal device to determine a timing advance for uplink transmission in the candidate cell. However, in the foregoing manner, the terminal device needs to initiate many random access procedures in the plurality of candidate cells, resulting in high power consumption and high random access interference of the terminal device. Therefore, how to reduce a quantity of random access procedures initiated by the terminal device is an urgent technical problem to be resolved.

### SUMMARY

This application provides a communication method and a communication apparatus, to reduce a quantity of random access procedures initiated by a terminal device.

According to a first aspect, a communication method is provided, including: A terminal device receives a TA of a first candidate cell; and the terminal device receives an identifier of a target cell of a switch and identification information of the first candidate cell, where the target cell is a second candidate cell, and the identification information of the first candidate cell indicates to determine a TA of the target cell based on the TA of the first candidate cell.

Specifically, the TA of the target cell is determined based on the TA of the first candidate cell.

Specifically, the terminal device can determine the TA of the second candidate cell based on the obtained TA of the first candidate cell, identifier of the target cell, and identification information of the first candidate cell, and the terminal device does not need to obtain the TA of the second candidate cell by initiating a random access procedure for the second candidate cell. In this way, a quantity of random access procedures that need to be initiated by the terminal device can be effectively reduced.

In a possible implementation, the method further includes: The terminal device sends a measurement report of the second candidate cell.

Specifically, the terminal device reports the measurement report of the second candidate cell, and the measurement report can be used by a network device to determine the second candidate cell as the target cell of the switch.

In a possible implementation, the method further includes: The terminal device receives indication information, where the indication information indicates to send a contention-free random access preamble in the first candidate cell, and the contention-free random access preamble is used to determine TA of the first candidate cell; and the terminal device sends the contention-free random access preamble in the first candidate cell based on the indication information.

In this way, the terminal device can send the contention-free random access preamble in the first candidate cell based on the indication information. This can improve efficiency of communication between the terminal device and the network device.

In a possible implementation, the first candidate cell and the second candidate cell belong to a first network device, and the first candidate cell is different from the second candidate cell.

Specifically, when the first candidate cell and the second candidate cell are two different candidate cells, the terminal device may initiate a random access procedure for one of the candidate cells, to determine a TA of the candidate cell, and may determine a TA of the other candidate cell based on the TA of the candidate cell. This can effectively reduce the quantity of random access procedures that need to be initiated by the terminal device, and reduce power consumption and random access interference of the terminal device.

In a possible implementation, the TA of the first candidate cell and the TA of the target cell are the same.

In this way, the quantity of random access procedures that need to be initiated by the terminal device can be effectively reduced, and power consumption and random access interference of the terminal device can be reduced.

In a possible implementation, the first candidate cell and the second candidate cell belong to a set of candidate target cells of the switch.

According to a second aspect, a communication method is provided, including: A first network device receives a contention-free random access preamble of a first candidate cell; and the first network device sends an identifier of a target cell of a switch and TA information of the target cell to a terminal device, where the target cell is a second candidate cell, and the TA information of the target cell is determined based on the contention-free random access preamble of the first candidate cell.

Specifically, the first network device may determine a TA of the first candidate cell based on the received contention-free random access preamble of the first candidate cell, and may further determine a TA of the second candidate cell based on the TA of the first candidate cell. In this way, when the first network device determines the second candidate cell as the target cell of the switch, the first network device does not need to trigger the terminal device to initiate a random access procedure for the second candidate cell. This can effectively reduce a quantity of random access procedures that need to be initiated by the terminal device, and effectively reduce power consumption and random access interference of the terminal device.

In a possible implementation, the TA information of the target cell includes at least one of the following: the TA of the target cell or identification information of the first candidate cell, where the identification information of the first candidate cell indicates to determine the TA of the target cell based on the first candidate cell.

Specifically, the terminal device may determine the TA of the second candidate cell based on any one of the foregoing information. In this way, the first network device does not need to trigger the terminal device to initiate the random access procedure for the second candidate cell. Further, the quantity of random access procedures that need to be initiated by the terminal device can be effectively reduced, and power consumption and random access interference of the terminal device can be effectively reduced.

In a possible implementation, the method further includes: The first network device sends indication information to the terminal device, where the indication information indicates to send the contention-free random access preamble in the first candidate cell; and the indication information includes contention-free random access resource information of the first candidate cell, and the contention-free random access resource information is used for transmission of the contention-free random access preamble.

In this way, the first network device may indicate the terminal device to send the contention-free random access preamble in the first candidate cell. This helps improve efficiency of communication between the terminal device and the network device.

In a possible implementation, the method further includes: The first network device sends configuration information of the first candidate cell and configuration information of the second candidate cell to the terminal device.

In this way, based on the configuration information of these candidate cells, the terminal device may perform a cell switch and data transmission after the cell switch is completed.

In a possible implementation, the first candidate cell and the second candidate cell belong to the first network device, and the first candidate cell is different from the second candidate cell.

Specifically, when the first candidate cell and the second candidate cell are two different candidate cells, the terminal device may initiate a random access procedure for one of the candidate cells, to determine a TA of the candidate cell, and may determine a TA of the other candidate cell based on the TA of the candidate cell. This can effectively reduce the quantity of random access procedures that need to be initiated by the terminal device, and reduce power consumption and random access interference of the terminal device.

In a possible implementation, the TA of the first candidate cell and the TA of the target cell are the same.

In this way, the quantity of random access procedures that need to be initiated by the terminal device can be effectively reduced, and power consumption and random access interference of the terminal device can be reduced.

In a possible implementation, the first candidate cell and the second candidate cell belong to a set of candidate target cells of the switch.

According to a third aspect, a communication method is provided, including: A first network device receives first indication information from a second network device, where the first indication information indicates to determine a TA of a second candidate cell based on a first candidate cell, and the first candidate cell and the second candidate cell belong to a third network device; the first network device receives TA information of the first candidate cell; and the first network device sends, based on the TA information of the first candidate cell and the first indication information, an identifier of a target cell of a switch and TA information of the target cell to a terminal device, where the target cell is the second candidate cell.

Specifically, the first network device can determine a relationship between a TA of the first candidate cell and the TA of the second candidate cell based on the first indication information, and the first network device may determine the TA of the second candidate cell based on the first indication information and the obtained TA information of the first candidate cell. In this way, the first network device does not need to trigger the terminal device to initiate a random access procedure for the second candidate cell. Therefore, a quantity of random access procedures that need to be initiated by the terminal device can be effectively reduced, and power consumption and random access interference of the terminal device can be reduced.

In a possible implementation, the TA information of the target cell includes at least one of the following: the TA of the target cell or identification information of the first candidate cell, where the identification information of the first candidate cell indicates to determine the TA of the target cell based on the first candidate cell.

Specifically, the terminal device may determine the TA of the second candidate cell based on any one of the foregoing information. In this way, the first network device does not need to trigger the terminal device to initiate the random access procedure for the second candidate cell. Further, the quantity of random access procedures that need to be initiated by the terminal device can be effectively reduced, and power consumption and random access interference of the terminal device can be effectively reduced.

In a possible implementation, that the first network device obtains the TA information of the first candidate cell includes: The first network device receives the TA information of the first candidate cell from the second network device; or the first network device receives the TA information of the first candidate cell from the terminal device.

In this way, in this application, the first network device is supported in obtaining the TA information of the first candidate cell in a plurality of ways.

In a possible implementation, the TA information of the first candidate cell includes at least one of the following: the TA of the first candidate cell or second indication information, where the second indication information indicates that at least one of the third network device and the terminal device has the TA of the first candidate cell, and the first candidate cell belongs to the third network device.

Specifically, based on any one of the foregoing information, the first network device can determine not to trigger the terminal device to initiate the random access procedure for the second candidate cell. Further, the quantity of random access procedures that need to be initiated by the terminal device can be effectively reduced, and power consumption and random access interference of the terminal device can be effectively reduced.

In a possible implementation, the first indication information indicates to determine the TA of the second candidate cell based on the TA of the first candidate cell; or the first indication information indicates to determine the TA of the second candidate cell based on contention-free random access configuration information of the first candidate cell.

Specifically, the first network device may determine the TA of the second candidate cell based on either of a contention-free random access preamble and the TA of the first candidate cell. In this way, the first network device can determine not to trigger the terminal device to initiate the random access procedure for the second candidate cell. Further, the quantity of random access procedures that need to be initiated by the terminal device can be effectively reduced, and power consumption and random access interference of the terminal device can be effectively reduced.

In a possible implementation, the method further includes: The first network device sends third indication information to the terminal device, where the third indication information indicates to send the contention-free random access preamble in the first candidate cell, and the contention-free random access preamble is used to determine the TA of the first candidate cell.

In this way, the first network device may indicate the terminal device to send the contention-free random access preamble in the first candidate cell. This helps improve efficiency of communication between the terminal device and the first network device.

In a possible implementation, the method further includes: The first network device receives frequency information of the first candidate cell and frequency information of the second candidate cell that are from the second network device; and the first network device determines the third indication information based on a frequency of the first candidate cell, a frequency of the second candidate cell, and a frequency of a serving cell.

Specifically, the first network device may determine the third indication information based on the frequency of the first candidate cell, the frequency of the second candidate cell, and the frequency of the serving cell. This helps the terminal device send a contention-free random access preamble in a candidate cell whose frequency is closer to the frequency of the serving cell. Therefore, communication interruption caused by frequency switching performed by the terminal device can be effectively avoided.

In a possible implementation, the method further includes: The first network device receives subcarrier spacing (subcarrier spacing, SCS) information of the first candidate cell and SCS information of the second candidate cell that are from the second network device; and the first network device determines the third indication information based on an SCS of the first candidate cell, an SCS of the second candidate cell, and an SCS of a serving cell.

Specifically, the first network device may determine the third indication information based on the SCS of the first candidate cell, the SCS of the second candidate cell, and the SCS of the serving cell. This helps the terminal device send a contention-free random access preamble in a candidate cell whose SCS is closer to the SCS of the serving cell. Therefore, communication interruption caused by SCS switching performed by the terminal device can be effectively avoided.

In a possible implementation, the method further includes: The first network device sends first request information to the second network device based on the frequency of the first candidate cell, the frequency of the second candidate cell, and the frequency of the serving cell, where the first request information is used to request the contention-free random access configuration information of the first candidate cell, and the contention-free random access configuration information of the first candidate cell is used for transmission of the contention-free random access preamble.

Specifically, the first network device may determine, based on the frequency of the first candidate cell, the frequency of the second candidate cell, and the frequency of the serving cell, to obtain contention-free random access resource information of a specific candidate cell. This helps the terminal device send a contention-free random access preamble in the candidate cell whose frequency is closer to the frequency of the serving cell. Therefore, communication interruption caused by frequency switching performed by the terminal device can be effectively avoided.

In a possible implementation, the method further includes: The first network device sends second request information to the second network device based on the SCS of the first candidate cell, the SCS of the second candidate cell, and the SCS of the serving cell, where the second request information is used to request the contention-free random access configuration information of the first candidate cell, and the contention-free random access configuration information of the first candidate cell is used for transmission of the contention-free random access preamble.

Specifically, the first network device may determine, based on the SCS of the first candidate cell, the SCS of the second candidate cell, and the SCS of the serving cell, to obtain contention-free random access configuration information of a specific candidate cell. This helps the terminal device send a contention-free random access preamble in the candidate cell whose SCS is closer to the SCS of the serving cell. Therefore, communication interruption caused by SCS switching performed by the terminal device can be effectively avoided.

In a possible implementation, the method further includes: The first network device receives contention-free random access resource information of the first candidate cell and contention-free random access configuration information of the second candidate cell that are from the second network device.

In this way, in this application, the first network device is supported in randomly selecting a piece of contention-free random access configuration information. It may be understood that the first network device may determine, based on the SCS of the first candidate cell, the SCS of the second candidate cell, and the SCS of the serving cell, to select which contention-free random access configuration information. This helps the terminal device send a contention-free random access preamble in the candidate cell whose SCS is closer to the SCS of the serving cell. Therefore, communication interruption caused by SCS switching performed by the terminal device can be effectively avoided. Alternatively, the first network device may determine, based on the frequency of the first candidate cell, the frequency of the second candidate cell, and the frequency of the serving cell, to select which contention-free random access configuration information. This helps the terminal device send a contention-free random access preamble in the candidate cell whose frequency is closer to the frequency of the serving cell. Therefore, communication interruption caused by frequency switching performed by the terminal device can be effectively avoided.

In a possible implementation, the TA of the first candidate cell and the TA of the target cell are the same.

In this way, the quantity of random access procedures that need to be initiated by the terminal device can be effectively reduced, and power consumption and random access interference of the terminal device can be reduced.

In a possible implementation, the first candidate cell and the second candidate cell belong to a set of candidate target cells of the switch.

According to a fourth aspect, a communication method is provided, including: A first network device determines first indication information, where the first indication information indicates to determine TA information of a second candidate cell based on a first candidate cell; and the first network device sends the first indication information to a third network device.

Specifically, the first network device can determine a relationship between a TA of the first candidate cell and a TA of the second candidate cell based on the first indication information, and the first network device may determine the TA of the second candidate cell based on the first indication information and obtained TA information of the first candidate cell. In this way, the first network device does not need to trigger a terminal device to initiate a random access procedure for the second candidate cell. Therefore, a quantity of random access procedures that need to be initiated by the terminal device can be effectively reduced, and power consumption and random access interference of the terminal device can be reduced.

In a possible implementation, that the first network device determines the first indication information includes: The first network device receives the first indication information from a second network device.

In a possible implementation, the method further includes: The first network device receives frequency information of the first candidate cell and frequency information of the second candidate cell that are from the second network device; and the first network device sends the frequency information of the first candidate cell and the frequency information of the second candidate cell to the third network device.

**In** a possible implementation, the method further includes: The first network device receives SCS information of the first candidate cell and SCS information of the second candidate cell that are from the second network device; and the first network device sends the SCS information of the first candidate cell and the SCS information of the second candidate cell to the third network device.

**In** a possible implementation, the method further includes: The first network device receives the TA information of the first candidate cell from the second network device; and the first network device sends the TA information of the first candidate cell to the third network device.

**In** a possible implementation, the TA information of the first candidate cell includes at least one of the following: the TA of the first candidate cell or second indication information, where the second indication information indicates that the second network device has the TA of the first candidate cell.

**In** a possible implementation, the method further includes: The first network device sends third indication information to the second network device, where the third indication information indicates to configure contention-free random access configuration information of the first candidate cell.

**In** a possible implementation, the method further includes: The first network device receives request information from the third network device, where the request information is used to request the contention-free random access configuration information of the first candidate cell; and the first network device sends the contention-free random access configuration information of the first candidate cell to the third network device.

**In** a possible implementation, the TA of the first candidate cell and the TA of the target cell are the same.

**In** a possible implementation, the first candidate cell and the second candidate cell belong to a set of candidate target cells of the switch.

According to a fifth aspect, a communication method is provided, including: A first network device determines first indication information, where the first indication information indicates to determine TA information of a second candidate cell based on a first candidate cell; and the first network device sends the first indication information to a second network device. In a possible implementation, the method further includes: The first network device sends frequency information of the first candidate cell and frequency information of the second candidate cell to the second network device.

In a possible implementation, the method further includes: The first network device sends an SCS of the first candidate cell and an SCS of the second candidate cell to the second network device.

In a possible implementation, the method further includes: The first network device receives second indication information from the second network device, where the second indication information indicates to configure contention-free random access configuration information of the first candidate cell; and the first network device sends the contention-free random access configuration information of the first candidate cell to the second network device.

Optionally, the second indication information may further indicate that contention-free random access configuration information is not configured for a candidate cell 2, and contention-free random access configuration information is configured for only a candidate cell 1.

In a possible implementation, the method further includes: The first network device receives request information from the second network device, where the request information is used to request the contention-free random access configuration information of the first candidate cell.

In a possible implementation, the method further includes: The first network device sends a TA of the first candidate cell to the second network device.

In a possible implementation, the TA of the first candidate cell and a TA of a target cell are the same.

In a possible implementation, the first candidate cell and the second candidate cell belong to a set of candidate target cells for a switch.

According to a sixth aspect, a communication apparatus is provided, including: a transceiver unit, configured to receive a TA of a first candidate cell. The transceiver unit is configured to receive an identifier of a target cell of a switch and identification information of the first candidate cell. The target cell is a second candidate cell, and the identification information of the first candidate cell indicates to determine a TA of the target cell based on the TA of the first candidate cell.

In a possible implementation, the transceiver unit is further configured to send a measurement report of the second candidate cell.

In a possible implementation, the transceiver unit is further configured to receive indication information, where the indication information indicates to send a contention-free random access preamble in the first candidate cell, and the contention-free random access preamble is used to determine the TA of the first candidate cell. The transceiver unit is configured to send the contention-free random access preamble in the first candidate cell based on the indication information.

In a possible implementation, the first candidate cell and the second candidate cell belong to the communication apparatus, and the first candidate cell is different from the second candidate cell.

In a possible implementation, the TA of the first candidate cell and the TA of the target cell are the same.

In a possible implementation, the first candidate cell and the second candidate cell belong to a set of candidate target cells of the switch.

According to a seventh aspect, a communication apparatus is provided, including: a transceiver unit, configured to receive a contention-free random access preamble of a first candidate cell. The transceiver unit is configured to send an identifier of a target cell of a switch and TA information of the target cell to a terminal device. The target cell is a second candidate cell, and the TA information of the target cell is determined based on the contention-free random access preamble of the first candidate cell.

In a possible implementation, the TA information of the target cell includes at least one of the following: a TA of the target cell or identification information of the first candidate cell, where the identification information of the first candidate cell indicates to determine the TA of the target cell based on the first candidate cell.

In a possible implementation, the transceiver unit is further configured to send indication information to the terminal device, where the indication information indicates to send the contention-free random access preamble in the first candidate cell; and the indication information includes contention-free random access resource information of the first candidate cell, and the contention-free random access resource information is used for transmission of the contention-free random access preamble.

In a possible implementation, the transceiver unit is further configured to send configuration information of the first candidate cell and configuration information of the second candidate cell to the terminal device.

In a possible implementation, the first candidate cell and the second candidate cell belong to the communication apparatus, and the first candidate cell is different from the second candidate cell.

In a possible implementation, a TA of the first candidate cell and the TA of the target cell are the same.

In a possible implementation, the first candidate cell and the second candidate cell belong to a set of candidate target cells of the switch.

According to an eighth aspect, a communication apparatus is provided, including: a transceiver unit, configured to receive first indication information from a second network device, where the first indication information indicates to determine TA of a second candidate cell based on a first candidate cell, and the first candidate cell and the second candidate cell belong to a third network device. The transceiver unit is further configured to obtain TA information of the first candidate cell. The transceiver unit is further configured to send, based on the TA information of the first candidate cell and the first indication information, an identifier of a target cell of a switch and TA information of the target cell to a terminal device, where the target cell is the second candidate cell.

In a possible implementation, the TA information of the target cell includes at least one of the following: a TA of the target cell or identification information of the first candidate cell, where the identification information of the first candidate cell indicates to determine the TA of the target cell based on the first candidate cell.

In a possible implementation, the transceiver unit is further configured to receive the TA information of the first candidate cell from the second network device; or the transceiver unit is further configured to receive the TA information of the first candidate cell from the terminal device.

In a possible implementation, the TA information of the first candidate cell includes at least one of the following: a TA of the first candidate cell or second indication information, where the second indication information indicates that at least one of the third network device and the terminal device has the TA of the first candidate cell, and the first candidate cell belongs to the third network device.

In a possible implementation, the first indication information indicates to determine the TA of the second candidate cell based on the TA of the first candidate cell; or the first indication information indicates to determine the TA of the second candidate cell based on contention-free random access configuration information of the first candidate cell.

In a possible implementation, the transceiver unit is further configured to send third indication information to the terminal device, where the third indication information indicates to send a contention-free random access preamble in the first candidate cell, and the contention-free random access preamble is used to determine the TA of the first candidate cell.

In a possible implementation, the transceiver unit is further configured to receive frequency information of the first candidate cell and frequency information of the second candidate cell that are from the second network device. The communication apparatus further includes a processing unit, configured to determine the third indication information based on a frequency of the first candidate cell, a frequency of the second candidate cell, and a frequency of a serving cell.

In a possible implementation, the transceiver unit is further configured to receive subcarrier spacing SCS information of the first candidate cell and SCS information of the second candidate cell that are from the second network device. The communication apparatus further includes a processing unit, configured to determine the third indication information based on an SCS of the first candidate cell, an SCS of the second candidate cell, and an SCS of a serving cell.

In a possible implementation, the transceiver unit is further configured to send first request information to the second network device based on the frequency of the first candidate cell, the frequency of the second candidate cell, and the frequency of the serving cell, where the first request information is used to request the contention-free random access configuration information of the first candidate cell, and the contention-free random access configuration information of the first candidate cell is used for transmission of the contention-free random access preamble.

In a possible implementation, the transceiver unit is further configured to send second request information to the second network device based on the SCS of the first candidate cell, the SCS of the second candidate cell, and the SCS of the serving cell, where the second request information is used to request the contention-free random access configuration information of the first candidate cell, and the contention-free random access configuration information of the first candidate cell is used for transmission of the contention-free random access preamble.

In a possible implementation, the transceiver unit is further configured to receive the contention-free random access configuration information of the first candidate cell and contention-free random access configuration information of the second candidate cell that are from the second network device.

In a possible implementation, the TA of the first candidate cell and the TA of the target cell are the same.

In a possible implementation, the first candidate cell and the second candidate cell belong to a set of candidate target cells of the switch.

According to a ninth aspect, a communication apparatus is provided, including: a processing unit, configured to determine first indication information, where the first indication information indicates to determine TA information of a second candidate cell based on a first candidate cell; and a transceiver unit, configured to send the first indication information to a third network device.

In a possible implementation, the transceiver unit is further configured to receive the first indication information from a second network device.

In a possible implementation, the transceiver unit is further configured to receive frequency information of the first candidate cell and frequency information of the second candidate cell that are from the second network device. The transceiver unit is further configured to send the frequency information of the first candidate cell and the frequency information of the second candidate cell to the third network device.

In a possible implementation, the transceiver unit is further configured to receive SCS information of the first candidate cell and SCS information of the second candidate cell that are from the second network device. The transceiver unit is further configured to send the SCS information of the first candidate cell and the SCS information of the second candidate cell to the third network device.

In a possible implementation, the transceiver unit is further configured to receive TA information of the first candidate cell from the second network device. The transceiver unit is further configured to send the TA information of the first candidate cell to the third network device.

In a possible implementation, the TA information of the first candidate cell includes at least one of the following: a TA of the first candidate cell or second indication information, where the second indication information indicates that the second network device has the TA of the first candidate cell.

In a possible implementation, the transceiver unit is further configured to send third indication information to the second network device, where the third indication information indicates to configure contention-free random access configuration information of the first candidate cell.

In a possible implementation, the transceiver unit is further configured to receive request information from the third network device, where the request information is used to request the contention-free random access configuration information of the first candidate cell. The transceiver unit is further configured to send the contention-free random access configuration information of the first candidate cell to the third network device.

In a possible implementation, the TA of the first candidate cell and a TA of a target cell are the same.

In a possible implementation, the first candidate cell and the second candidate cell belong to a set of candidate target cells for a switch.

According to a tenth aspect, a communication apparatus is provided, including: a processing unit, configured to determine first indication information, where the first indication information indicates to determine TA information of a second candidate cell based on a first candidate cell; and a transceiver unit, configured to send the first indication information to a second network device.

In a possible implementation, the transceiver unit is further configured to send frequency information of the first candidate cell and frequency information of the second candidate cell to the second network device.

In a possible implementation, the transceiver unit is further configured to send SCS information of the first candidate cell and SCS information of the second candidate cell to the second network device.

In a possible implementation, the transceiver unit is further configured to receive second indication information from the second network device, where the second indication information indicates to configure contention-free random access configuration information of the first candidate cell. A first network device sends the contention-free random access configuration information of the first candidate cell to the second network device.

In a possible implementation, the transceiver unit is further configured to receive request information from the second network device, where the request is used to request the contention-free random access configuration information of the first candidate cell.

In a possible implementation, the transceiver unit is further configured to send a TA of the first candidate cell to the second network device.

In a possible implementation, the TA of the first candidate cell and a TA of a target cell are the same.

In a possible implementation, the first candidate cell and the second candidate cell belong to a set of candidate target cells for a switch.

According to an eleventh aspect, a communication apparatus is provided, including a processor. The processor is configured to: enable, by executing a computer program or instructions or through a logic circuit, the communication apparatus to perform the method according to any one of the first aspect and the possible implementations of the first aspect, the communication apparatus to perform the method according to any one of the second aspect and the possible implementations of the second aspect, the communication apparatus to perform the method according to any one of the third aspect and the possible implementations of the third aspect, the communication apparatus to perform the method according to any one of the fourth aspect and the possible implementations of the fourth aspect, or the communication apparatus to perform the method according to any one of the fifth aspect and the possible implementations of the fifth aspect.

In a possible implementation, the communication apparatus further includes a memory, configured to store the computer program or the instructions.

In a possible implementation, the communication apparatus further includes a communication interface, configured to input a signal and/or output a signal.

According to a twelfth aspect, a communication apparatus is provided, including a logic circuit and an input/output interface. The input/output interface is configured to input a signal and/or output a signal. The logic circuit is configured to perform the method according to any one of the first aspect and the possible implementations of the first aspect. Alternatively, the logic circuit is configured to perform the method according to any one of the second aspect and the possible implementations of the second aspect. Alternatively, the logic circuit is configured to perform the method according to any one of the third aspect and the possible implementations of the third aspect. Alternatively, the logic circuit is configured to perform the method according to any one of the fourth aspect and the possible implementations of the fourth aspect. Alternatively, the logic circuit is configured to perform the method according to any one of the fifth aspect and the possible implementations of the fifth aspect.

According to a thirteenth aspect, a computer-readable storage medium is provided. The computer-readable storage medium stores a computer program or instructions. When the computer program or the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed.

According to a fourteenth aspect, a computer program product is provided, including instructions. When the instructions are run on a computer, the method according to any one of the first aspect and the possible implementations of the first aspect is performed, or the method according to any one of the second aspect and the possible implementations of the second aspect is performed, or the method according to any one of the third aspect and the possible implementations of the third aspect is performed, or the method according to any one of the fourth aspect and the possible implementations of the fourth aspect is performed, or the method according to any one of the fifth aspect and the possible implementations of the fifth aspect is performed.

According to a fifteenth aspect, a chip is provided, including a logic circuit. The logic circuit is configured to perform the method according to any one of the first aspect and the possible implementations of the first aspect. Alternatively, the logic circuit is configured to perform the method according to any one of the second aspect and the possible implementations of the second aspect. Alternatively, the logic circuit is configured to perform the method according to any one of the third aspect and the possible implementations of the third aspect. Alternatively, the logic circuit is configured to perform the method according to any one of the fourth aspect and the possible implementations of the fourth aspect. Alternatively, the logic circuit is configured to perform the method according to any one of the fifth aspect and the possible implementations of the fifth aspect.

For descriptions of beneficial effect of the fourth aspect to the fifteenth aspect, refer to the descriptions of the beneficial effect of the first aspect to the third aspect. Details are not described herein again.

### BRIEF DESCRIPTION OF DRAWINGS

FIG. 1 is a diagram of a communication system 100 to which an embodiment of this application is applicable;
FIG. 2 is a diagram of an application scenario 200 according to an embodiment of this application;
FIG. 3 is a diagram of a cell switch procedure;
FIG. 4 is a schematic interaction flowchart of a communication method 400 according to an embodiment of this application;
FIG. 5 is a schematic interaction flowchart of a communication method 500 according to an embodiment of this application;
FIG. 6 is a schematic interaction flowchart of a communication method 600 according to an embodiment of this application;
FIG. 7 is a schematic interaction flowchart of a communication method 700 according to an embodiment of this application;
FIG. 8 is a schematic interaction flowchart of a communication method 800 according to an embodiment of this application;
FIG. 9 is a schematic interaction flowchart of a communication method 900 according to an embodiment of this application;
FIG. 10 is a schematic interaction flowchart of a communication method 1000 according to an embodiment of this application;
FIG. 11 is a schematic interaction flowchart of a communication method 1100 according to an embodiment of this application;
FIG. 12 is a schematic interaction flowchart of a communication method 1200 according to an embodiment of this application;
FIG. 13 is a schematic interaction flowchart of a communication method 1300 according to an embodiment of this application;
FIG. 14 is a schematic interaction flowchart of a communication method 1400 according to an embodiment of this application;
FIG. 15 is a schematic interaction flowchart of a communication method 1500 according to an embodiment of this application;
FIG. 16 is a schematic interaction flowchart of a communication method 1600 according to an embodiment of this application;
FIG. 17 is a diagram of a structure of a communication apparatus 1700 according to an embodiment of this application;
FIG. 18 is a diagram of a structure of a communication apparatus 1800 according to an embodiment of this application;
FIG. 19 is a diagram of a structure of a communication apparatus 1900 according to an embodiment of this application;
FIG. 20 is a diagram of a structure of a communication apparatus 2000 according to an embodiment of this application; and
FIG. 21 is a diagram of a structure of a communication apparatus 2100 according to an embodiment of this application.

### DESCRIPTION OF EMBODIMENTS

The following describes technical solutions of this application with reference to accompanying drawings.

The technical solutions in embodiments of this application may be applied to various communication systems, for example, a long term evolution (long term evolution, LTE) system, an LTE frequency division duplex (frequency division duplex, FDD) system, an LTE time division duplex (time division duplex, TDD) system, a universal mobile telecommunications system (universal mobile telecommunications system, UMTS), a 5th generation (5th generation, 5G) or new radio (new radio, NR) system, an evolved system after 5G such as a 6th generation (6th generation, 6G) system, and non-terrestrial network (non-terrestrial network, NTN) systems such as an inter-satellite communication system and a satellite communication system. The satellite communication system includes a satellite base station and a terminal device. The satellite base station provides a communication service for the terminal device. The satellite base station may also communicate with a terrestrial base station. A satellite may serve as a base station, or may serve as a terminal device. The satellite may be a non-terrestrial base station, a non-terrestrial device, or the like, for example, an unmanned aerial vehicle, a hot air balloon, a low earth orbit satellite, a medium earth orbit satellite, or a high earth orbit satellite.

The technical solutions in embodiments of this application are applicable to both a homogeneous network scenario and a heterogeneous network scenario. In addition, a transmission point is not limited. Coordinated multi-point transmission may be performed between macro base stations, between micro base stations, and between a macro base station and a micro base station. The technical solutions are applicable to the FDD/TDD system. The technical solutions in embodiments of this application are applicable to not only a low-frequency scenario (sub 6G), but also a high-frequency scenario (above 6 GHz), terahertz, optical communication, and the like. The technical solutions in embodiments of this application are applicable to not only communication between a network device and a terminal, but also communication between network devices, communication between terminals, and communication in the internet of vehicles, communication in the internet of things, communication in the industrial internet, and the like.

The technical solutions in embodiments of this application may also be applied to a scenario in which a terminal is connected to a single base station. The base station connected to the terminal and a core network (core network, CN) connected to the base station are of a same standard. For example, if the CN is a 5G core, the base station is correspondingly a 5G base station, and the 5G base station is directly connected to the 5G core. Alternatively, if the CN is a 6G core, the base station is a 6G base station, and the 6G base station is directly connected to the 6G core. The technical solutions in embodiments of this application are also applicable to a dual connectivity (dual connectivity, DC) scenario in which a terminal is connected to at least two base stations.

The technical solutions in embodiments of this application may also use a macro-micro scenario including different forms of base stations in a communication network. For example, the base station may be a satellite, an air balloon station, or an uncrewed aerial vehicle station. The technical solutions in embodiments of this application are also applicable to a scenario in which both a wide-coverage base station and a small-coverage base station exist.

The technical solutions in embodiments of this application may be applied to a scenario in which there is a high-reliability service requirement, for example, a port, industrial manufacturing, transportation, and a coal mine.

It may be further understood that, the technical solutions in embodiments of this application may be further applied to a 5.5G wireless communication system, a 6G wireless communication system, and a wireless communication system after 6G. Application scenarios include but are not limited to a terrestrial cellular communication scenario, an NTN scenario, a satellite communication scenario, a high altitude platform station (high altitude platform station, HAPS) communication scenario, a vehicle-to-everything (vehicle-to-everything, V2X) scenario, an integrated access and backhaul (integrated access and backhaul, IAB) scenario, a reconfigurable intelligent surface (reconfigurable intelligent surface, RIS) communication scenario, and the like.

The terminal in embodiments of this application may be a device with a wireless transceiver function, and may be specifically user equipment (user equipment, UE), an access terminal, a subscriber unit (subscriber unit), a subscriber station, a mobile station (mobile station), a remote station, a remote terminal, a mobile device, a user terminal, a wireless communication device, a user agent, or a user apparatus. The terminal device may alternatively be a satellite phone, a cellular phone, a smartphone, a wireless data card, a wireless modem, or a machine-type communication device, or may be a cordless phone, a session initiation protocol (session initiation protocol, SIP) phone, a wireless local loop (wireless local loop, WLL) station, a personal digital assistant (personal digital assistant, PDA), customer-premises equipment (customer-premises equipment, CPE), a smart point of sale (point of sale, POS) machine, a handheld device with a wireless communication function, a computing device or another processing device connected to a wireless modem, a vehicle-mounted device, a communication device carried on a high altitude aircraft, a wearable device, an uncrewed aerial vehicle, a robot, a terminal in device-to-device (device-to-device, D2D) communication, a terminal in V2X, a virtual reality (virtual reality, VR) terminal device, an augmented reality (augmented reality, AR) terminal device, a wireless terminal in industrial control (industrial control), a wireless terminal in self-driving (self-driving), a wireless terminal in telemedicine (remote medical), a wireless terminal in a smart grid (smart grid), a wireless terminal in transportation safety (transportation safety), a wireless terminal in a smart city (smart city), a wireless terminal in a smart home (smart home), a terminal device in an evolved communication network after 5G, or the like. This is not limited in embodiments of this application.

In embodiments of this application, a communication apparatus configured to implement a function of the terminal device may be a terminal device, or may be an apparatus that can support the terminal device in implementing the function, for example, a chip system. The apparatus may be installed in the terminal device or used in combination with the terminal device. In embodiments of this application, the chip system may include a chip, or may include a chip and another discrete component.

The network device in embodiments of this application is a device with a wireless transceiver function, and is configured to communicate with the terminal device. An access network device may be a node in a radio access network (radio access network, RAN), and may also be referred to as a base station, or may be referred to as a RAN node. The access network device may be an evolved NodeB (evolved NodeB, eNB or eNodeB) in LTE, a base station in a 5G network, for example, a gNodeB (gNB), a base station in an evolved public land mobile network (public land mobile network, PLMN) after 5G, a broadband network gateway (broadband network gateway, BNG), an aggregation switch, a 3rd generation partnership project (3rd generation partnership project, 3GPP) access device, or the like. For example, the RAN may be configured as a RAN defined in a 3GPP protocol, an open radio access network (open radio access network, O-RAN), or a cloud access network (cloud radio access network, C-RAN).

The network device in embodiments of this application may further include various forms of base stations, for example, a macro base station, a micro base station (also referred to as a small cell), a relay station, a transmission reception point (transmission reception point, TRP), a transmission point (transmission point, TP), a mobile switching center, a device that performs a base station function in device-to-device (device-to-device, D2D), vehicle-to-everything (vehicle-everything, V2X), and machine-to-machine (machine, M2M) communication, a network device in an NTN communication system, and the like. This is not specifically limited in embodiments of this application.

The network device in embodiments of this application may alternatively include a network element or a module that implements some functions of the base station, for example, include one or more of the following: a central unit (central unit, CU), a distributed unit (distributed unit, DU), or a radio unit (radio unit, RU). Optionally, the CU may be further separated into a CU-control plane (control plane, CP) and a CU-user plane (user plane, UP). Functions of the CU and the DU may be implemented by different network elements, or may be implemented by both a baseband unit (baseband unit, BBU) of the base station. A function of the RU may be implemented by a radio frequency device of the base station. For example, the radio frequency device of the base station may be a remote radio processing unit (remote radio unit, RRU), a pico remote radio unit (pico remote radio unit, pRRU), an active antenna processing unit (active antenna unit, AAU), or another unit, module, or device with a radio frequency processing function. A communication interface protocol between the BBU and the radio frequency device may be a common public radio interface (common public radio interface, CPRI) interface protocol, an enhanced common public radio interface (enhanced common public radio interface, eCPRI) interface protocol, a fronthaul interface protocol between a DU and an RU in an O-RAN system, or the like. This is not limited.

In embodiments of this application, an apparatus configured to implement a function of the network device may be a network device, or may be an apparatus that can support the network device in implementing the function, for example, a chip system. The apparatus may be installed in the network device or used in combination with the network device. In embodiments of this application, the chip system may include a chip, or may include a chip and another discrete component.

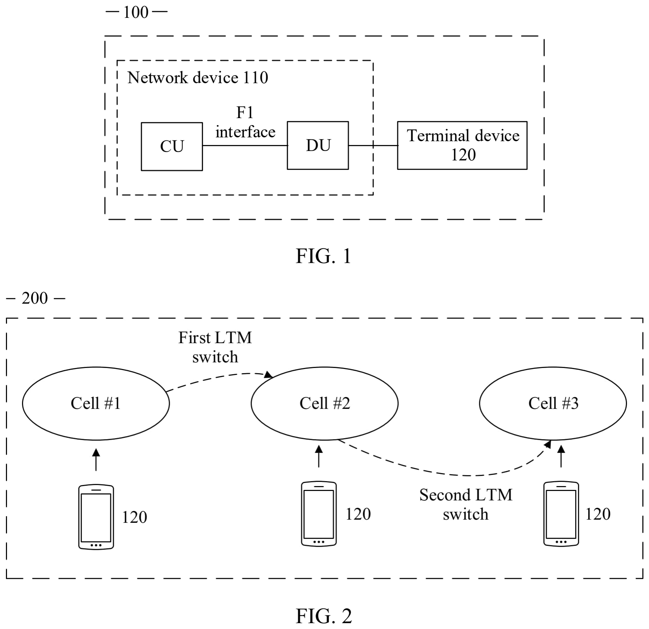

FIG. 1 is a diagram of a communication system 100 to which an embodiment of this application is applicable. As shown in FIG. 1, the communication system 100 includes a network device 110 and a terminal device 120. A quantity of terminal devices 120 and a quantity of network devices 110 in the communication system 100 are not limited in this application. It should be understood that FIG. 1 is merely an example for understanding, and cannot limit the protection scope claimed in this application.

It may be understood that the terminal device 120 may be any one of the terminal devices listed above, and the network device 110 may be any one of the network devices listed above. This is not limited.

Specifically, the network device 110 may use a central unit (central unit, CU)-distributed unit (distributed unit, DU) architecture, or may not use a CU-DU architecture. This is not limited. For ease of description, this application is described by using an example in which the network device 110 uses the CU-DU architecture. The network device 110 may include one CU and at least one DU, and the at least one DU communicates with each other via the CU.

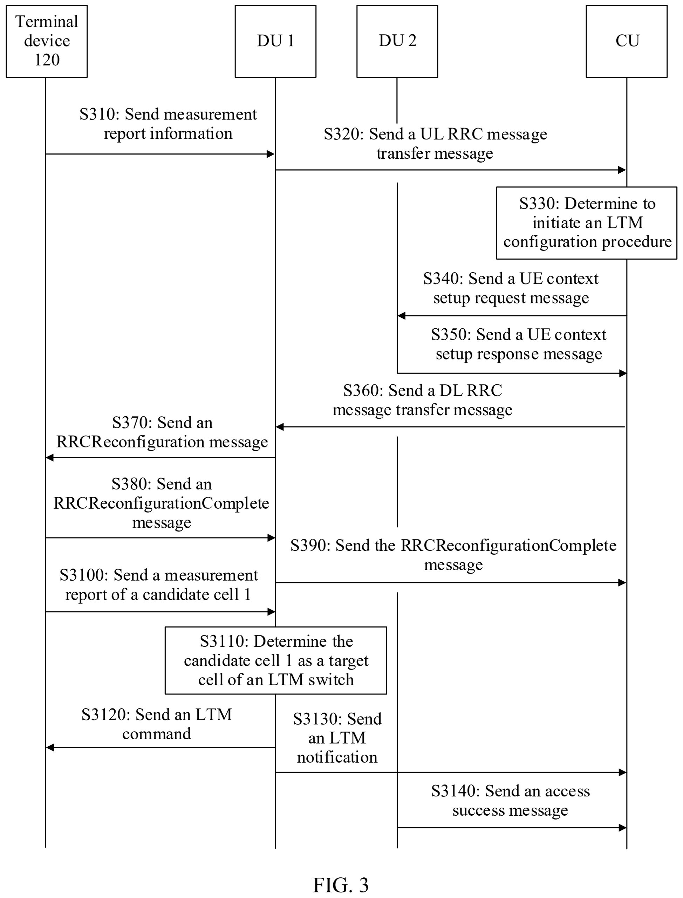

In the communication system 100, the DU of the network device 110 may perform a cell switch decision. For details, refer to FIG. 3.

FIG. 2 is a diagram of an application scenario 200 according to an embodiment of this application. As shown in FIG. 2, the application scenario 200 includes a cell #1 to a cell #3. A terminal device 120 is located in the cell #1, and the cell #1 is a serving cell of the terminal device 120. The terminal device receives an RRC reconfiguration message from the cell #1, where the RRC reconfiguration message includes candidate cell configurations of L1/L2 triggered mobility (L1/L2 triggered mobility, LTM) of the cell #2 and the cell #3. The cell #2 and the cell #3 are candidate cells, and the candidate cells are potential target cells for a switch. The terminal device performs the following first LTM switch and second LTM switch based on the same RRC reconfiguration message.

In short, before the first LTM switch, the cell #1 is the serving cell (namely, a source serving cell), and the cell #2 and the cell 3 are the candidate cells. After the first LTM switch, the serving cell of the terminal device 120 switches from the cell #1 to the cell #2. The cell #2 becomes a serving cell of the terminal device 120 after the first LTM switch and is also a serving cell before the second LTM switch. The cell #1 becomes a candidate cell for the second LTM switch, and the cell #3 is still a candidate cell. After the second LTM switch, the terminal device 120 switches from the cell #2 to the cell #3. The cell #3 becomes a serving cell of the terminal device 120 after the second LTM switch. The cell #2 becomes a candidate cell for a third LTM switch, and the cell #1 is still a candidate cell. In other words, each of the cell #1 to the cell #3 may become a serving cell after a switch is completed. For ease of differentiation and description, in this application, the cell #1 is defined as the source serving cell (further explanation is provided below), the cell #2 is defined as a target cell for the first LTM switch (the terminal device 120 switches from the cell #1 to the cell #2), and the cell #3 is only a candidate cell.

In the application scenario 200, a network device 110 interacting with the terminal device 120 is a base station. If the network device 110 uses a CU-DU split architecture, the network device 110 includes one CU and at least one DU. The cell #1 to the cell #3 belong to different DUs of the same CU, and all the DUs may belong to the network device 110. Alternatively, the cell #1 to the cell #3 all belong to a same DU, and the DU belongs to the network device 110. In this way, the application scenario 200 may be applied to interaction inside the base station. In the application scenario 200, the cell #1 to the cell #3 may alternatively belong to different DUs of different CUs. For example, the cell #1 belongs to a DU 1 of a CU 1, and the cell 2 and the cell #3 belong to a DU 2 of a CU 2, where the CU 1 and the CU 2 are different. In this way, the application scenario 200 may be applied to interaction between base stations.

In conclusion, the application scenario 200 may be applied to interaction between base stations and interaction inside the base station. For ease of description, it is defined in this application that one cell corresponds to one device (referred to as a "network device" below), and the device may be a DU or a CU. For ease of differentiation, a network device 100 to a network device 400 are defined in this application. The network device 100 (corresponding to the cell #1), the network device 300 (corresponding to the cell #2), and the network device 400 (corresponding to the cell #3) may all be DUs, and the network device 200 is a CU. This is further described below.

It should be noted that the technical solutions disclosed in this application may be applied to interaction between base stations (for example, inter-gNB), or may be applied to interaction inside the base station (for example, intra-gNB). For ease of description, interaction inside the base station is mainly used as an example for description in this application. However, related descriptions may be applied to a scenario of interaction between base stations. For example, the network device 100 and the network device 200 belong to a base station 1, and the network device 300 belongs to a base station 2. Unified descriptions are provided herein. Details are not described below again.

FIG. 3 is a diagram of a cell switch procedure. As shown in FIG. 3, the cell switch procedure includes the following steps.

S310: A terminal device 120 sends measurement report information to a DU 1.

Correspondingly, the DU 1 receives the measurement report information. The measurement report information includes measurement results of a plurality of neighboring cells.

Optionally, the measurement report information is a layer 3 (L3) measurement result. The L3 measurement result includes the measurement results of the plurality of neighboring cells on which the terminal device 120 performs L3 smoothing processing.

S320: The DU 1 sends an uplink radio resource control message transfer (uplink radio resource control message transfer, UL RRC message transfer) message to a CU.

Correspondingly, the CU receives the UL RRC message transfer message. The UL RRC message transfer message includes the measurement report information in S310.

S330: The CU determines to initiate an LTM configuration procedure.

Specifically, the CU determines, based on the measurement report information, that LTM configuration procedures need to be initiated for some or all of the plurality of neighboring cells in S310. In other words, the CU determines LTM candidate cells (which may include the cell #1 to the cell #3 in FIG. 2) based on the measurement report information, so that the terminal device 120 performs an LTM switch in the LTM candidate cells.

S340: The CU sends a UE context setup request message (UE CONTEXT SETUP REQUEST MESSAGE) to a DU 2.

Specifically, the UE context setup request message includes an identifier of at least one candidate cell. The at least one candidate cell includes a candidate cell 1 described below. For example, the at least one candidate cell includes the cell #1 to the cell #3 in FIG. 2. The candidate cell 1 may be the cell #2 or the cell #3.

Optionally, the at least one candidate cell belongs to the plurality of neighboring cells. The UE context setup request message is used to request LTM configuration information of the at least one candidate cell, so that the terminal device 120 can perform the LTM switch based on the LTM configuration information.

S350: The DU 2 sends a UE context setup response message (UE CONTEXT SETUP RESPONSE MESSAGE) to the CU.

Specifically, if the DU 2 accepts an LTM configuration request, the DU 2 determines to respond to the UE context setup request message. The UE context setup response message includes lower-layer configuration information (for example, radio link control (radio link control, RLC) configuration information, media access control information (media access control, MAC) configuration information, and physical layer (physical layer, PHY) configuration information) of the at least one candidate cell. The information can be used by the terminal device 120 to perform the LTM switch and data transmission after the LTM switch is completed.

S360: The CU sends a downlink (downlink, DL) RRC message transfer (DL RRC MESSAGE TRANSFER) message to the DU 1.

Correspondingly, the DU 1 receives the DL RRC message transfer message. The DL RRC message transfer message includes an RRC reconfiguration (RRCReconfiguration) message, and the RRCReconfiguration message includes the lower-layer configuration information of the at least one candidate cell.

S370: The DU 1 sends the RRCReconfiguration message to the terminal device 120.

Correspondingly, the terminal device 120 receives the RRCReconfiguration message.

It may be understood that a cell that receives the RRCReconfiguration message is a source serving cell, namely, the cell #1.

Specifically, the RRCReconfiguration message includes the LTM configuration information provided by the DU 2 for the at least one candidate cell. In other words, the terminal device 120 can perform the LTM switch based on the RRCReconfiguration message.

Optionally, the RRCReconfiguration message may further include random access common configuration information of each of the at least one candidate cell. The random access common configuration information is used by the terminal device 120 to send a contention-free random access preamble in the corresponding candidate cell, and the contention-free random access preamble is used to determine a TA of the candidate cell. The TA is used to control timing of uplink transmission (for example, through a physical uplink shared channel (physical uplink shared channel, PUSCH) or a physical uplink control channel (physical uplink control channel, PUCCH)) of the terminal device, to ensure that receiving of uplink transmissions (for example, through the PUSCH or the PUCCH) of a plurality of terminal devices at a base station side is synchronized.

It should be noted that the RRCReconfiguration message may be used for an initial LTM switch (a first LTM switch), and may also be used for a plurality of subsequent switches (for example, a second LTM switch), and no additional RRCReconfiguration message is required. Unified descriptions are provided herein. Details are not described below again.

S380: The terminal device 120 sends an RRCReconfigurationComplete message to the DU 1.

Correspondingly, the DU 1 receives the RRCReconfigurationComplete message.

S390: The DU 1 sends the RRCReconfigurationComplete message to the CU.

Correspondingly, the CU receives the RRCReconfigurationComplete message.

S3100: The terminal device 120 sends a measurement report of the candidate cell 1 to the DU 1.

Correspondingly, the DU 1 receives the measurement report of the candidate cell 1.

Specifically, before or after S3100, the DU 1 may send a plurality of physical downlink control channel (physical downlink control channel, PDCCH) orders (order) to the terminal device 120. The plurality of PDCCH orders are used to indicate or trigger the terminal device 120 to send contention-free random access preambles in all of the at least one candidate cell, to obtain a TA of the candidate cell. The PDCCH order includes contention-free random access configuration information of the candidate cell, and the contention-free random access configuration information is used for transmission of the contention-free random access preamble. The terminal device 120 sends the contention-free access preambles in all of the at least one candidate cell, to obtain the TA of the candidate cell. For a function of the TA, refer to the descriptions of S370. Details are not described herein again.

It may be understood that one PDCCH order corresponds to one candidate cell. The DU 1 sends the plurality of PDCCH orders to the terminal device 120, to trigger the terminal device 120 to initiate random access procedures for the plurality of candidate cells.

Optionally, the terminal device 120 receives a random access response (random access response, RAR) message, where the random access response message includes the TA of the candidate cell.

S3110: The DU 1 determines the candidate cell 1 as a target cell for the LTM switch.

Specifically, the DU 1 determines, based on the measurement report of the candidate cell 1, that channel quality of the candidate cell 1 is better than channel quality of a serving cell, and further determines that the serving cell of the terminal device 120 switches to the candidate cell 1.

S3120: The DU 1 sends an LTM command to the terminal device 120.

Correspondingly, the terminal device 120 receives the LTM command (LTM command) generated by the DU 1, where the LTM command includes an identifier of the target cell of the switch. The terminal device 120 switches to the target cell based on the LTM command. The target cell is the candidate cell 1 (for example, the cell #2).

Specifically, after receiving the LTM command, the terminal device 120 may access the target cell in a random access manner, for example, through a random access channel (random access channel, RACH), or may access the target cell in a random access channel-less (RACH-less) or random access channel-skip (RACH-skip) manner, for example, directly access the target cell through a PUSCH or a PUCCH, with no need to send a random access preamble. The PUSCH or the PUCCH needs to carry indication information a, and the indication information a indicates, to the DU 2, that the terminal device 120 successfully accesses the candidate cell 1. For example, the indication information a includes a cell-radio network temporary identifier (cell-radio network temporary identifier, C-RNTI) of the terminal device 120.

S3130: The DU 1 sends an LTM notification to the CU.

Specifically, the CU determines the target cell for the LTM switch based on the LTM notification. The LTM notification includes the identifier of the target cell, for example, an identifier of the candidate cell 1.

Further, the CU sends downlink data to the DU 2 corresponding to the target cell.

S3140: The DU 2 sends an access success (ACCESS SUCCESS) message to the CU.

Correspondingly, the CU receives the access success message, where the access success message includes the identifier of the target cell, and indicates, to the CU, that the terminal device 120 has successfully accessed the target cell.

It may be understood that, after the DU 2 determines, based on the access procedure in S3120, that the terminal device 120 successfully accesses the target cell, the DU 2 sends the access success message to the CU. Further, the CU determines, based on the identifier of the target cell in the access success message, that the terminal device 120 successfully switches to the target cell.

Generally, before the LTM cell switch is performed, the DU 1 indicates the terminal device 120 to separately initiate a random access procedure for the at least one pre-configured candidate cell, so that the DU 1 or the DU 2 obtains the TA of the at least one candidate cell. After receiving the LTM command, the terminal device 120 switches to the target cell based on the LTM command. To obtain the TA of the candidate cell before performing the LTM cell switch, the terminal device 120 needs to initiate the random access procedure for each of the at least one candidate cell before receiving the LTM command. If a large quantity of LTM candidate cells are configured for the terminal device 120, the terminal device 120 needs to initiate many unnecessary random access procedures, resulting in high power consumption and high random access interference of the terminal device 120. Further, communication of the terminal device 120 in the serving cell may be interrupted.

In view of this, this application provides a communication method and a communication apparatus, to reduce a quantity of random access procedures initiated by a terminal device.

The following describes the communication method and the communication apparatus in embodiments of this application with reference to the accompanying drawings.

It should be noted that a method 400 is mainly described from a DU side, a method 500 is mainly described from a source DU side, a method 600 is mainly described from a terminal device side, and a method 700 is also mainly described from the terminal device side. The method 400, the method 600, and the method 700 are related at a technical level, or are mainly described from different device sides based on a same technical problem. Related terms and descriptions may be mutually referenced. The method 500, the method 600, and the method 700 are related at a technical level, or are mainly described from different device sides based on a same technical problem. Related terms and descriptions may be mutually referenced. Therefore, the method 400, the method 600, and the method 700 are associated embodiments; and the method 500, the method 600, and the method 700 are associated embodiments.

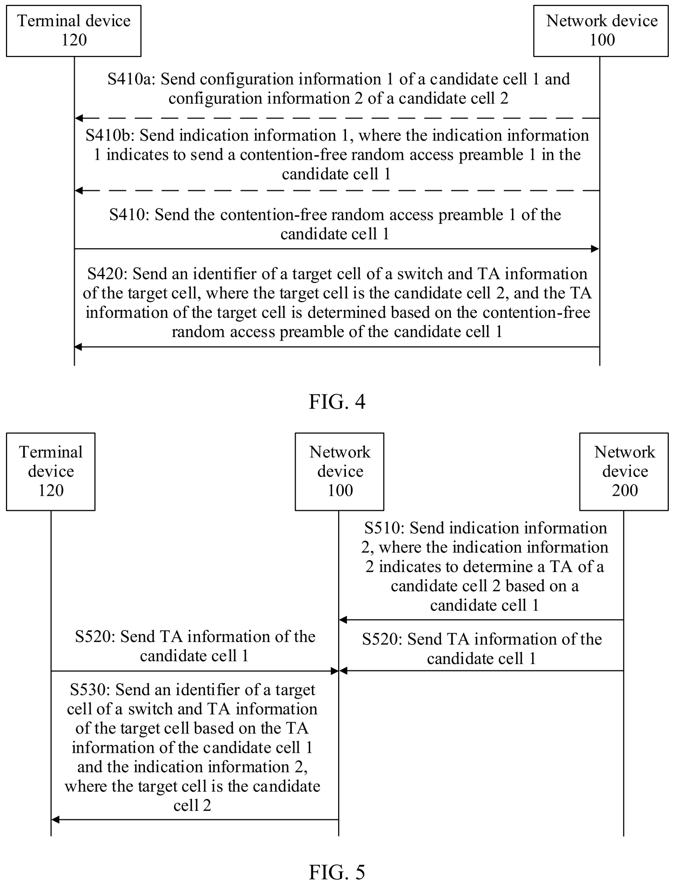

FIG. 4 is a schematic interaction flowchart of a communication method 400 according to an embodiment of this application. The method 400 may be performed by a terminal device 120 and a network device 100, or may be performed by modules and/or components (for example, chips or integrated circuits) that are installed in the terminal device 120 and the network device 100 and that have corresponding functions. This is not limited in embodiments of this application. The following uses an example in which the method 400 is performed by the terminal device 120 and the network device 100 for description. For descriptions of the network device 100, refer to the descriptions in FIG. 2. The network device 100 manages a plurality of cells. The plurality of cells include a candidate cell 1 (for example, the cell #2 in FIG. 2) and a candidate cell 2 (for example, the cell #3 in FIG. 2). The candidate cell 1 and the candidate cell 2 are co-antenna cells. As shown in FIG. 4, the method 400 includes the following steps.

Optionally, in S410a, the network device 100 sends configuration information 1 of the candidate cell 1 and configuration information 2 of the candidate cell 2 to the terminal device 120.

Correspondingly, the terminal device 120 receives the configuration information 1 of the candidate cell 1 and the configuration information 2 of the candidate cell 2. For specific descriptions of the configuration information 1 and the configuration information 2, refer to the descriptions of S360 and S370 in FIG. 3. Details are not described herein again. The configuration information 1 of the candidate cell 1 further includes random access common configuration information, and the common configuration information includes a root sequence and the like.

In this way, based on the configuration information of these candidate cells, the terminal device 120 may perform a cell switch and data transmission after the cell switch is completed.

Optionally, in S410b, the network device 100 sends indication information 1 to the terminal device 120, where the indication information 1 indicates the terminal device 120 to send a contention-free random access preamble 1 in the candidate cell 1.

Specifically, the indication information 1 includes contention-free random access configuration information 1 of the candidate cell 1, and the contention-free random access configuration information 1 is used for transmission of the contention-free random access preamble 1. Correspondingly, the terminal device 120 receives the indication information 1 from the network device 100, and can send the contention-free random access preamble 1 in the candidate cell 1 based on the indication information 1. In this way, the terminal device 120 can send the contention-free random access preamble 1 in the candidate cell 1 based on the indication information 1. This can improve efficiency of communication between the terminal device 120 and the network device 100.

Further, the terminal device 120 can send the contention-free random access preamble 1 in the candidate cell 1 based on the random access common configuration information and the contention-free random access configuration information 1.

Specifically, the contention-free random access configuration information 1 includes indication information of a time-frequency resource used to transmit the contention-free random access preamble 1 in the candidate cell 1 and/or an identifier of the contention-free random access preamble 1. There is a correspondence between the time-frequency resource for the contention-free random access preamble 1 and a synchronization signal and physical broadcast channel block (synchronization signal and physical broadcast channel block, SSB) or a channel state information (channel state information, CSI)-reference signal (reference signal, RS). The contention-free random access preamble 1 and/or a time-frequency resource for contention-free random access are/is used to uniquely identify the terminal device 120 in the candidate cell 1.

In a possible implementation, the indication information 1 may be the foregoing PDCCH order. The network device 100 triggers, based on the PDCCH order, the terminal device 120 to send the contention-free random preamble 1 in the candidate cell 1 to perform TA measurement on the contention-free random access preamble 1, so as to determine a TA of the candidate cell 1. Further, the network device 100 determines, based on the contention-free random access preamble 1 and/or the time-frequency resource for contention-free random access, that a currently accessed terminal device is the terminal device 120.

S410: The terminal device 120 sends the contention-free random access (contention-free random access, CFRA) preamble 1 to the network device 100 in the candidate cell 1.

Correspondingly, the network device 100 receives the contention-free random access preamble 1 in the candidate cell 1, and determines the TA of the candidate cell 1 and a TA of the candidate cell 2 based on the contention-free random access preamble 1. The contention-free random access preamble 1 may uniquely identify the terminal device 120 in the candidate cell 1.

Specifically, a same network device (which may be the network device 100 in the method 400, or may be the network device 300 in the following method 500, and this is not limited) manages two different cells: a cell A and a cell B. If the cell A and the cell B are co-antenna cells, it is determined that there is correlation between a TA of the cell A and a TA of the cell B. The correlation may be as follows: For a same terminal device, the TA of the cell A and the TA of the cell B are the same, or an absolute value of a difference between the TA of the cell A and the TA of the cell B is less than a threshold. The threshold may be set to a cyclic prefix (cyclic prefix, CP) length of the cell A or the cell B, or another value. The foregoing definition may be further applicable to the following embodiments. The candidate cell 1 may be the cell A, and the candidate cell 2 may be the cell B. Therefore, there is the correlation between the TA of the candidate cell 1 and the TA of the candidate cell 2. This description is also applicable to all the following embodiments. Details are not described below again.

Specifically, the network device 100 may determine a candidate cell group. The candidate cell group includes co-antenna candidate cells, and TAs of the plurality of candidate cells in the group meet the foregoing correlation. For example, the candidate cell 1 and the candidate cell 2 belong to the candidate cell group.

In a possible implementation, the candidate cell 1 and the candidate cell 2 belong to a set of candidate target cells of an LTM switch. A serving cell of the terminal device 120 may switch to any candidate cell in the set of the candidate target cells of the switch. The set of the candidate target cells of the LTM switch may be the foregoing candidate cell group.

In a possible implementation, the network device 100 is a DU (which is a DU corresponding to the cell #1 to the cell #3), and the DU is responsible for managing the serving cell, the candidate cell 1, and the candidate cell 2 of the terminal device 120. For ease of understanding, the following uses an example in which the network device 100 is the DU for description.

S420: The network device 100 sends an identifier of a target cell of a switch and TA information of the target cell to the terminal device 120, where the target cell is the candidate cell 2, and the TA information of the target cell is determined based on the contention-free random access preamble 1 of the candidate cell 1.

Correspondingly, the terminal device 120 receives the identifier of the target cell of the switch and the TA information of the target cell. The terminal device 120 determines, based on identification information of the target cell, the candidate cell 2 as the target cell of the switch.

In a possible implementation, the identifier of the target cell of the switch and the TA information of the target cell are carried in the LTM command (LTM command) message shown in S3120 in FIG. 3. The LTM command message may be a media access control (media access control, MAC) control element, and is generated by the DU.

Optionally, the identifier of the target cell of the switch and the TA information of the target cell may be separately carried in same information or different information. This is not limited.

In a possible implementation, that the TA information of the target cell is determined based on the contention-free random access preamble 1 of the candidate cell 1 may be: The network device 100 (the DU) determines that the TA of the candidate cell 1 and a TA of the target cell meet the foregoing correlation if the candidate cell 1 and the target cell are co-antenna candidate cells. Therefore, the network device 100 (the DU) determines the TA (for example, a first TA) of the candidate cell 1 based on the contention-free random access preamble 1, and further determines the TA (for example, a second TA) of the target cell based on the correlation between the two TAs. For example, the first TA and the second TA are the same.

In another possible implementation, that the TA information of the target cell is determined based on the contention-free random access preamble 1 of the candidate cell 1 may be: The network device 100 (the DU) determines the TA of the target cell based on the obtained contention-free random access preamble 1 of the candidate cell 1 and the foregoing correlation.

The TA of the target cell is determined in the foregoing manner. When determining the candidate cell 2 as the target cell for the LTM switch, the network device 100 (the DU) does not need to trigger the terminal device 120 to initiate a random access procedure for the target cell, to obtain the TA of the target cell. In this way, a quantity of random access procedures initiated by the terminal device can be effectively reduced, and communication interruption of the serving cell can be reduced.

In a possible implementation, the TA information of the target cell includes at least one of the following:
the TA of the target cell or identification information of the candidate cell 1.

In an example P1, the TA of the target cell is an absolute TA value of the target cell. The terminal device 120 determines the absolute TA value of the target cell as uplink timing, and accesses the target cell based on the absolute TA value (that is, in a RACH-skip or RACH-less manner).

In an example P2, before determining the candidate cell 2 as the target cell, the network device 100 (the DU) receives the contention-free random access preamble 1 in the candidate cell 1, further determines the TA of the candidate cell 1, and sends an RAR message to the terminal device 120, where the RAR message includes the TA (an absolute TA value) of the candidate cell 1. After determining the candidate cell 2 as the target cell, the network device 100 (the DU) sends the identification information of the candidate cell 1 to the terminal device 120, where the identification information of the candidate cell 1 indicates the terminal device 120 to determine the TA of the target cell based on the candidate cell 1. For example, the identification information of the candidate cell 1 indicates that the TA of the target cell and the TA of the candidate cell 1 are the same. In this way, the terminal device 120 may access the target cell (namely, the candidate cell 2) based on the determined TA (namely, a RACH-skip or RACH-less manner) of the target cell.

In a possible implementation, the identification information of the candidate cell 1 includes an identifier (for example, a cell index index) of the candidate cell 1, or includes information about an identification feature of the candidate cell 1 (for example, a dedicated bit of the candidate cell 1).

It should be noted that the method 400 may be applied to a scenario in which the candidate cell 1, the candidate cell 2, and the serving cell all belong to the DU (namely, the network device 100). The method 400 mainly involves interaction between the DU and the terminal device 120.

The following describes, with reference to other accompanying drawings, a scenario in which the candidate cell 1 and the candidate cell 2 as well as the serving cell separately belong to different DUs. For example, the candidate cell 1 and the candidate cell 2 belong to the network device 300, and the serving cell belongs to the network device 100.

It should be further noted that, for further descriptions of the method 400, refer to the following method 800.

FIG. 5 is a schematic interaction flowchart of a communication method 500 according to an embodiment of this application. The method 500 may be performed by a terminal device 120, a network device 100, and a network device 200, or may be performed by modules and/or components (for example, chips or integrated circuits) that are installed in the terminal device 120, the network device 100, and the network device 200 and that have corresponding functions. This is not limited in embodiments of this application. The following uses an example in which the method 500 is performed by the terminal device 120, the network device 100, and the network device 200 for description. For descriptions of the network device 100 and the network device 200, refer to the descriptions in FIG. 2. The method 500 includes the following steps.

S510: The network device 200 sends indication information 2 to the network device 100, where the indication information 2 indicates to determine a TA of a candidate cell 2 based on a candidate cell 1.

Correspondingly, the network device 100 receives the indication information 2, and determines, based on the indication information 2, that a TA of the candidate cell 1 is related to the TA of the candidate cell 2 (for details, refer to the foregoing descriptions of S410).

In an implementation, the network device 200 receives the indication information 2 from a network device 300, and then sends the indication information 2 to the network device 100. The candidate cell 1 and the candidate cell 2 are co-antenna cells, and both belong to the network device 300.

In another implementation, the network device 200 determines the indication information 2, and sends the indication information 2 to the network device 100.

In a possible implementation scenario, the network device 100 is a source DU (the source DU is a DU corresponding to a serving cell), the network device 200 is a CU, and the network device 300 is a candidate DU (the candidate DU is a DU corresponding to the cell #2 and the cell # 3). For ease of understanding, the following uses an example in which the network device 100 is the source DU, the network device 300 is the candidate DU, and the network device 200 is the CU for description. The foregoing definition or description may be applicable to all the following embodiments.

S520: The network device 100 receives TA information of the candidate cell 1.

In an example U1, the network device 100 (the source DU) receives the TA information of the candidate cell 1 from the network device 200 (the CU). Specifically, the network device 200 (the CU) sends the TA information of the candidate cell 1 that is from the network device 300 (the candidate DU) to the network device 100 (the source DU).

In an example U2, the network device 100 (the source DU) receives the TA information of the candidate cell 1 from the terminal device 120. Specifically, the network device 100 (the source DU) indicates the terminal device 120 to report the TA information of the candidate cell 1, and the terminal device 120 reports the TA information of the candidate cell 1 to the network device 100 (the source DU) based on the indication.

In a possible implementation, the TA information of the candidate cell 1 includes at least one of the following:
the TA of the candidate cell 1 or indication information 3, where the indication information 3 indicates that the TA of the candidate cell 1 is already obtained or that random access to the TA of the candidate cell 1 is completed.

Specifically, in a possible implementation, the indication message 3 includes an indication field, indicating that at least one of the network device 300 (the candidate DU) and the terminal device 120 has the TA of the candidate cell 1, or a contention-free random access procedure used to obtain the TA of the candidate cell 1 is completed. Correspondingly, the network device 100 (the source DU) determines, based on the indication message 3, that at least one of the network device 300 (the candidate DU) and the terminal device 120 has the TA of the candidate cell 1, or the contention-free random access procedure used to obtain the TA of the candidate cell 1 is completed.

S530: The network device 100 sends an identifier of a target cell of a switch and TA information of the target cell to the terminal device 120 based on the TA information of the candidate cell 1 and the indication information 2, where the target cell is the candidate cell 2.

Specifically, the identifier of the target cell of the switch and the TA information of the target cell may be carried in the LTM command message in S3120 in FIG. 3. For details, refer to the descriptions of S420. Details are not described herein again.

Specifically, the terminal device 120 receives the identifier of the target cell of the switch and the TA information of the target cell, and determines a TA (namely, an absolute TA value) of the target cell based on the TA information of the target cell. The TA information of the target cell includes at least one of the following: the TA of the target cell or identification information of the candidate cell 1. For detailed descriptions of the TA information of the target cell, refer to the related descriptions of the method 400. Details are not described herein again. When the TA information of the target cell is the absolute TA value, the terminal device 120 determines the absolute TA value of the target cell as uplink timing, and accesses the target cell based on the absolute TA value (that is, in a RACH-skip or RACH-less manner). When the TA information of the target cell is the identification information of the candidate cell 1, the terminal device 120 may determine the TA of the target cell based on the TA of the candidate cell 1, to be specific, the TA of the target cell and the TA of the candidate cell 1 are the same, and then access the target cell based on the TA of the target cell. For descriptions of obtaining the TA of the candidate cell 1, refer to the related descriptions of the method 400. Details are not described herein again.

According to the foregoing technical solution, the network device 100 (the source DU) can determine, based on information such as the indication information 2, the TA information of the candidate cell 1, and information that the candidate cell 2 is the target cell of the switch, that the terminal device 120 does not need to be triggered to initiate a random access procedure for the target cell during an LTM switch. In this way, a quantity of random access procedures initiated by the terminal device can be effectively reduced, and power consumption of the terminal device can be reduced.

In a possible implementation, that the indication information 2 indicates to determine the TA of the candidate cell 2 based on the candidate cell 1 includes: The indication information 2 indicates to determine the TA of the candidate cell 2 based on the TA of the candidate cell 1, or the indication information 2 indicates to determine the TA of the candidate cell 2 based on contention-free random access configuration information 1 of the candidate cell 1.

In an example T1, when the indication information 2 indicates that the TA of the candidate cell 2 is determined based on the TA of the candidate cell 1, the network device 100 (the source DU) determines the TA of the target cell based on the information such as the indication information 2, the obtained TA of the candidate cell 1, and the information that the candidate cell 2 is the target cell of the switch. For example, the TA of the target cell and the TA of the candidate cell 1 are the same.

In an example T2, when the indication information 2 indicates to determine the TA of the candidate cell 2 based on the contention-free random access configuration information 1 of the candidate cell 1, the network device 100 (the source DU) determines the TA of the target cell based on the indication information 2, the contention-free random access configuration information 1 of the candidate cell 1, and the information that the candidate cell 2 is the target cell of the switch. For example, the TA of the target cell and the TA of the candidate cell 1 are the same.

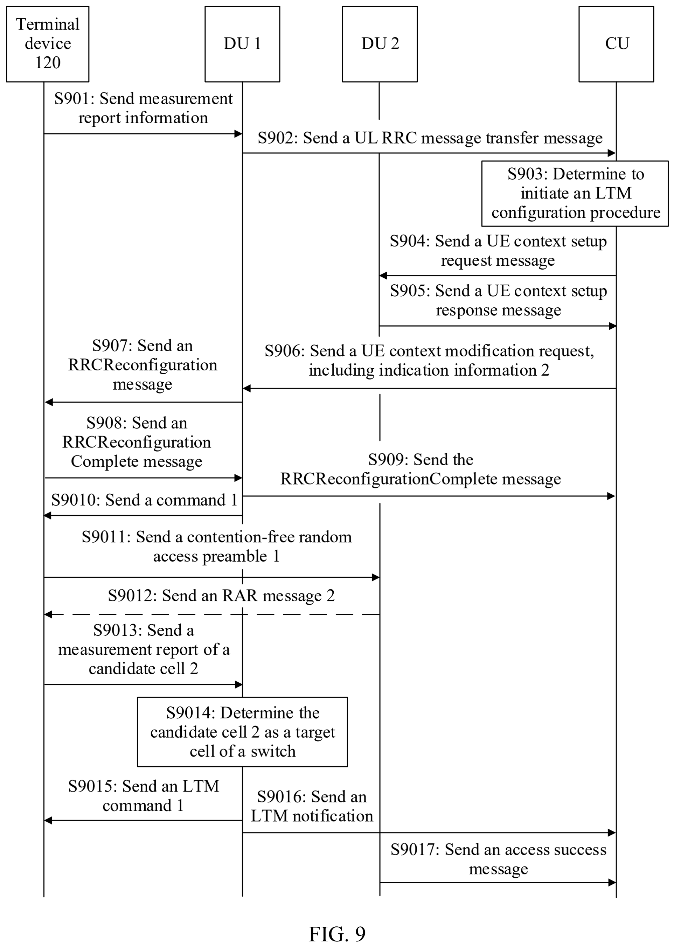

The network device 100 (the source DU) may obtain the contention-free random access configuration information 1 of the candidate cell 1 from the network device 200 (the CU). For detailed descriptions of the process, refer to the descriptions in FIG. 9. Details are not described herein again.

In a possible implementation, the method 500 may further include the following steps.

S510a1: The network device 200 sends frequency information of the candidate cell 1 and frequency information 2 of the candidate cell 2 to the network device 100.

S510b1: The network device 100 sends indication information 4 to the terminal device 120 based on a frequency of the candidate cell 1, a frequency of the candidate cell 2, and a frequency of the serving cell, where the indication information 4 indicates the terminal device 120 to send a contention-free random access preamble 1 in the candidate cell 1.

Correspondingly, the terminal device 120 receives the indication information 4 from the network device 100 (the source DU), and sends the contention-free random access preamble 1 in the candidate cell 1 based on the indication information 4.

Specifically, the frequency of the candidate cell 1 is close to or the same as the frequency of the serving cell (for example, a difference between the frequency of the candidate cell 1 and the frequency of the serving cell satisfies a small frequency threshold). Alternatively, the frequency of the candidate cell 2 and the frequency of the serving cell are different or have a large difference. The network device 100 (the source DU) determines, based on this, to trigger the terminal device 120 to initiate a random access procedure for the candidate cell 1, and sends the indication information 4 to the terminal device 120.

Specifically, the network device 100 (the source DU) may determine the indication information 4 based on the frequency of the candidate cell 1, the frequency of the candidate cell 2, and the frequency of the serving cell. This helps the terminal device 120 send a contention-free random access preamble in a candidate cell whose frequency is closer to the frequency of the serving cell. Therefore, communication interruption of the serving cell caused by frequency switching performed by the terminal device can be effectively avoided.

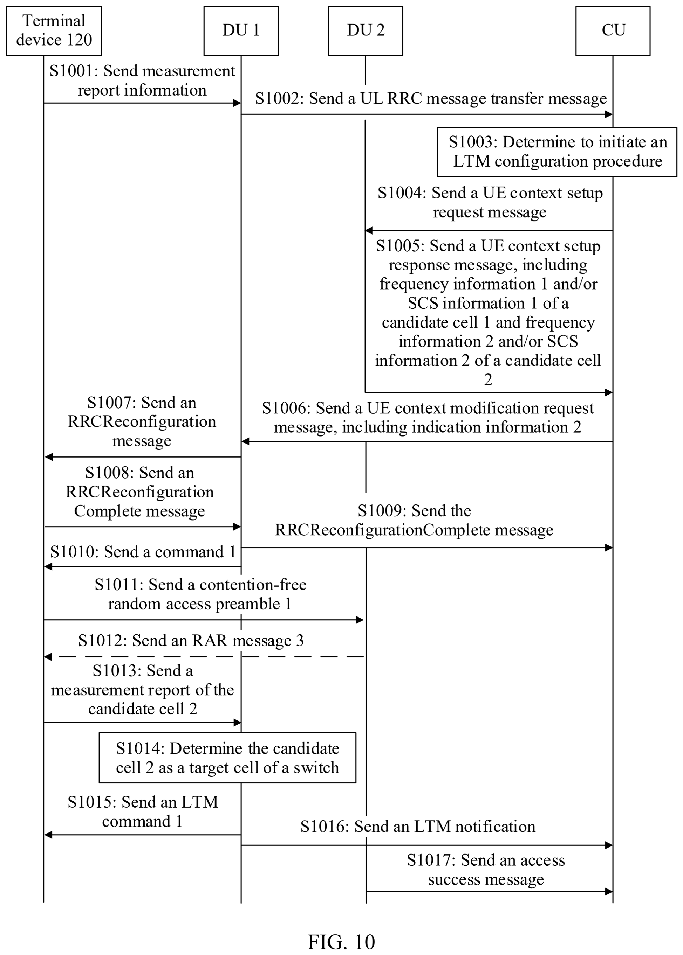

For detailed descriptions that the network device 100 (the source DU) obtains, from the network device 200 (the CU), the frequency information 1 of the candidate cell 1 and the frequency information 2 of the candidate cell 2, refer to the descriptions in FIG. 10.

In a possible implementation, the method 500 may further include the following steps.

S520a2: The network device 200 sends subcarrier spacing (subcarrier spacing, SCS) information 1 of the candidate cell 1 and SCS information 2 of the candidate cell 2 to the network device 100.

S520b2: The network device 100 sends indication information 5 to the terminal device 120 based on an SCS 1 of the candidate cell 1, an SCS 2 of the candidate cell 2, and an SCS of the serving cell, where the indication information 5 indicates the terminal device 120 to send a contention-free random access preamble 1 in the candidate cell 1.

Correspondingly, the terminal device 120 receives the indication information 5 from the network device 100 (the source DU), and sends the contention-free random access preamble 1 in the candidate cell 1 based on the indication information 5.

Specifically, the SCS of the candidate cell 1 is close to or the same as the SCS of the serving cell (for example, an SCS difference between the SCS of the candidate cell 1 and the SCS of the serving cell satisfies a small SCS threshold). Alternatively, the SCS of the candidate cell 2 and the SCS of the serving cell are different or have a large difference. The network device 100 (the source DU) determines, based on this, to initiate a random access procedure for the candidate cell 1, and sends the indication information 5 to the terminal device 120.

Specifically, the network device 100 (the source DU) may determine the indication information 5 based on the SCS of the candidate cell 1, the SCS of the candidate cell 2, and the SCS of the serving cell. This helps the terminal device 120 send a contention-free random access preamble in a candidate cell whose SCS is appropriately closer to the SCS of the serving cell. Therefore, communication interruption of the serving cell caused by SCS switching performed by the terminal device can be effectively avoided.

For detailed descriptions that the network device 100 (the source DU) obtains, from the network device 200 (the CU), the SCS of the candidate cell 1 and the SCS of the candidate cell 2, refer to the descriptions in FIG. 10.

In a possible implementation, when the network device 100 (the source DU) receives the contention-free random access configuration information 1 of the candidate cell 1 and contention-free random access configuration information 2 of the candidate cell 2 from the network device 200 (the CU), the network device 100 (the source DU) sends the indication information 4 to the terminal device 120 based on the frequency of the candidate cell 1, the frequency of the candidate cell 2, and the frequency of the serving cell, or the network device 100 (the source DU) sends the indication information 5 to the terminal device 120 based on the SCS of the candidate cell 1, the SCS of the candidate cell 2, and the SCS of the serving cell.

In a possible implementation, the method 500 may further include the following step.

S520c: The network device 100 sends request information 1 to the network device 200 based on the frequency of the candidate cell 1, the frequency of the candidate cell 2, and the frequency of the serving cell, where the request information 1 is used to request the contention-free random access configuration information 1 of the candidate cell 1.

Specifically, when the network device 100 (the source DU) does not have the contention-free random access configuration information of the candidate cell 1, the network device 100 (the source DU) determines, based on the frequency of the candidate cell 1, the frequency of the candidate cell 2, and the frequency of the serving cell, to send the request information 1 to the network device 300 (the candidate DU) via the network device 200 (the CU). Correspondingly, the network device 300 (the candidate DU) determines the contention-free random access configuration information of the candidate cell 1 based on the request information 1, and sends the contention-free random access configuration information 1 of the candidate cell 1 to the network device 100 (the source DU) via the network device 200 (the CU). For descriptions of the frequency of the candidate cell 1, the frequency of the candidate cell 2, and the frequency of the serving cell, refer to the descriptions of S510a1. Details are not described herein again.

In a possible implementation, the method 500 may further include the following step.

S520d: The network device 100 sends request information 2 to the network device 200 based on the SCS of the candidate cell 1, the SCS of the candidate cell 2, and the SCS of the serving cell, where the request information 2 is used to request the contention-free random access configuration information 1.

Specifically, when the network device 100 (the source DU) does not have the contention-free random access configuration information of the candidate cell 1, the network device 100 (the source DU) determines, based on the SCS of the candidate cell 1, the SCS of the candidate cell 2, and the SCS of the serving cell, to send the request information 2 to the network device 300 (the candidate DU) via the network device 200 (the CU). Correspondingly, the network device 300 (the candidate DU) determines the contention-free random access configuration information 1 of the candidate cell 1 based on the request information 2, and sends the contention-free random access configuration information 1 of the candidate cell 1 to the network device 100 (the source DU) via the network device 200 (the CU). For descriptions of the SCS of the candidate cell 1, the SCS of the candidate cell 2, and the SCS of the serving cell, refer to the descriptions of S510a2. Details are not described herein again.

It may be understood that the method 500 is applied to a scenario in which both the candidate cell 1 and the candidate cell 2 belong to the candidate DU and the serving cell belongs to the source DU. The method 500 involves interaction between the source DU, the terminal device 120, the candidate DU, and the CU.

It should be noted that the method 500 may be further applied to a scenario of interaction between base stations. For example, the source DU and the CU belong to a base station 1, and the candidate DU belongs to a base station 2. For a specific method, refer to the foregoing descriptions.

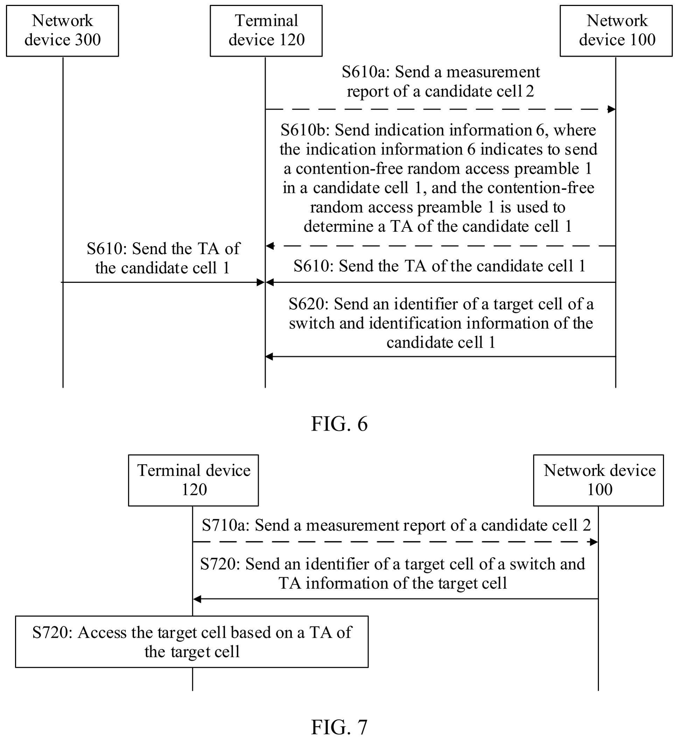

FIG. 6 is a schematic interaction flowchart of a communication method 600 according to an embodiment of this application. The method 600 may be performed by a terminal device 120, a network device 100, and a network device 300, or may be performed by modules and/or components (for example, chips or integrated circuits) that are installed in the terminal device 120, the network device 100, and the network device 300 and that have corresponding functions. This is not limited in embodiments of this application. The following uses an example in which the method 600 is performed by the terminal device 120, the network device 100, and the network device 300 for description. For descriptions of the network device 100 and the network device 300, refer to the foregoing descriptions. As shown in FIG. 6, the method 600 includes the following steps.

S610: The terminal device 120 receives a TA of a candidate cell 1.

Specifically, when the candidate cell 1 belongs to the network device 100 (a DU) (corresponding to the method 400), the network device 100 (the DU) triggers, according to a PDCCH order (indication information 6), the terminal device 120 to send a contention-free random preamble 1 in the candidate cell 1. Further, the network device 100 (the DU) performs TA measurement on the contention-free random access preamble 1, to determine the TA of the candidate cell 1. The network device 100 (the DU) sends an RAR message to the terminal device 120, where the RAR message includes the TA (an absolute TA value) of the candidate cell 1.

Specifically, when the candidate cell 1 belongs to the network device 300 (a candidate DU) (corresponding to the method 500), the network device 100 (a source DU) (corresponding to the method 500) triggers, according to a PDCCH order (indication information 6), the terminal device 120 to send a contention-free random preamble 1 in the candidate cell 1. Further, the network device 300 (the candidate DU) performs TA measurement on the contention-free random access preamble 1, to determine the TA of the candidate cell 1. The network device 300 (the candidate DU) sends an RAR message to the terminal device, where the RAR message includes the TA (an absolute TA value) of the candidate cell 1.

According to the foregoing method, the terminal device 120 may obtain the TA of the candidate cell 1.

S620: The network device 100 sends an identifier of a target cell of a switch and TA information of the target cell to the terminal device 120, where the target cell is a candidate cell 2.

Correspondingly, the terminal device 120 receives the identifier of the target cell of the switch and the TA information of the target cell from the network device 100. For description details of the TA information of the target cell and a method for obtaining the TA information of the target cell by the network device 100, refer to the descriptions of the method 400 and the method 500. Details are not described herein again.

Specifically, the terminal device 120 can determine a TA of the target cell based on the TA information of the target cell. When the TA information of the target cell is the TA (the absolute TA value) of the target cell, the TA (the absolute TA value) of the target cell received by the terminal device in S620 and a TA (an absolute TA value) of a candidate cell indicated in the RAR message received in S610 are the same.

It should be noted that the network device 100 in S620 is the network device 100 (the DU) in the method 400, or the network device 100 (the source DU) in the method 500.

In a possible implementation, the method 600 may further include the following step.

S610a: The terminal device 120 sends a measurement report of the candidate cell 2 to the network device 100.

Specifically, the terminal device 120 may send the measurement report of the candidate cell 2 to the network device 100. The network device 100 determines, based on the measurement report of the candidate cell 2, to use the candidate cell 2 as the target cell of the switch.

According to the foregoing technical solution, in this application, the network device does not need to trigger the terminal device to initiate a random access procedure for the target cell. In this way, a quantity of random access procedures that need to be initiated by the terminal device can be reduced.

It may be understood that the method 600 may be applied to a scenario in which both the candidate cell 1 and the candidate cell 2 belong to a same candidate DU and a serving cell belongs to the source DU, and may also be applied to a scenario in which the candidate cell, the candidate cell 1, and the serving cell all belong to a same DU.

It should be noted that the method 600 may be further applied to a scenario of interaction between base stations. For details, refer to the foregoing descriptions. Details are not described herein again.

FIG. 7 is a schematic interaction flowchart of a communication method 700 according to an embodiment of this application. The method 700 may be performed by a terminal device 120 and a network device 100, or may be performed by modules and/or components (for example, chips or integrated circuits) that are installed in the terminal device 120 and the network device 100 and that have corresponding functions. This is not limited in embodiments of this application. The following uses an example in which the method 700 is performed by the terminal device 120 and the network device 100 for description. For descriptions of the network device 100, refer to the foregoing descriptions. As shown in FIG. 7, the method 700 includes the following steps.

S710: The network device 100 sends an identifier of a target cell of a switch and a TA of the target cell to the terminal device 120, where the target cell is a candidate cell 2.

Correspondingly, the terminal device 120 receives the identifier of the target cell of the switch and the TA information of the target cell from the network device 100. For description details of the TA information of the target cell and a method for obtaining the TA information of the target cell by the network device 100, refer to the descriptions of the method 400 and the method 500. Details are not described herein again.

It should be noted that the network device 100 in S710 may be the network device 100 (the DU) in the method 400, or may be the network device 100 (the source DU) in the method 500.

S720: The terminal device 120 accesses the target cell based on a TA of the target cell.

According to the foregoing technical solution, in this application, the network device does not need to trigger the terminal device to initiate a random access procedure for the target cell. In this way, a quantity of random access procedures that need to be initiated by the terminal device can be reduced.

It should be noted that, in this application, the terminal device does not need to obtain a TA of a candidate cell 1, and the terminal device 120 may access the target cell based on the TA of the target cell in an LTM command (that is, in a RACH-skip or RACH-less manner).

In a possible implementation, the method 700 may further include the following step.

S710a: The terminal device 120 sends a measurement report of the candidate cell 2 to the network device 100.

Specifically, the terminal device 120 may send the measurement report of the candidate cell 2 to the network device 100. The network device 100 determines, based on the measurement report of the candidate cell 2, to use the candidate cell 2 as the target cell of the switch.

It may be understood that the method 700 may be applied to a scenario in which both the candidate cell 1 and the candidate cell 2 belong to a same candidate DU and a serving cell belongs to the source DU, and may also be applied to a scenario in which the candidate cell, the candidate cell 1, and the serving cell all belong to a same DU.

It should be noted that the method 700 may be further applied to a scenario of interaction between base stations. For details, refer to the foregoing descriptions. Details are not described herein again.

It should be further noted that the method 700 may further include steps corresponding to or the same as the foregoing method 400 to method 600, for example, receiving the configuration information 1 of the candidate cell 1.

The foregoing methods are further described below with reference to other accompanying drawings.

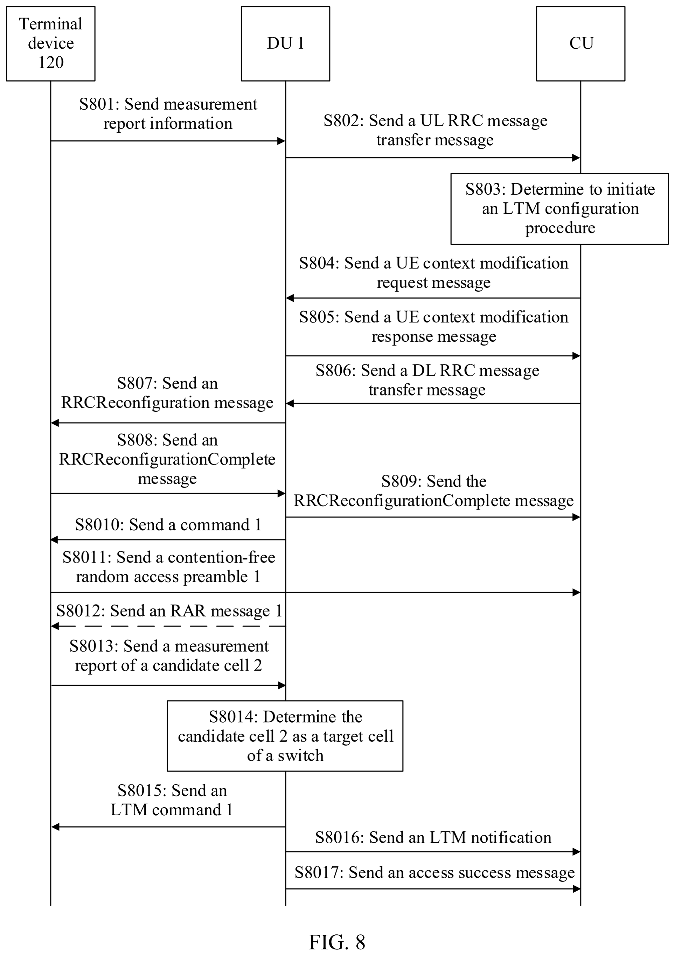

It should be noted that methods shown in FIG. 8 to FIG. 10 are further descriptions of the method 400 to the method 700. In addition, the methods shown in FIG. 8 to FIG. 10 may also be understood as supplementary descriptions of the method 400 to the method 700. ADU 1 in FIG. 8 may be the foregoing network device 100. In FIG. 9 and FIG. 10, a DU 1 may be the foregoing network device 100, a DU 2 may be the foregoing network device 300, and a CU may be the foregoing network device 200.

FIG. 8 is a schematic interaction flowchart of a communication method 800 according to an embodiment of this application. The method 800 may be performed by a terminal device 120, the DU 1, and a CU, or may be performed by modules and/or components (for example, chips or integrated circuits) that are installed in the terminal device 120, the DU 1, and the CU and that have corresponding functions. This is not limited in embodiments of this application. The following uses an example in which the method 800 is performed by the terminal device 120, the DU 1, and the CU for description. As shown in FIG. 8, the method 800 includes the following steps.

S801: The terminal device 120 sends measurement report information to the DU 1.

S802: The DU 1 sends an UL RRC message transfer message to the CU.

S803: The CU determines to initiate an LTM configuration procedure.

S804: The CU sends a UE context modification request message to the DU 1.

For descriptions of S810 to S840, refer to the descriptions of S310 to S340. Details are not described herein again.

S805: The DU 1 sends a UE context modification response message to the CU.

If the DU 1 accepts an LTM configuration request, the DU 1 determines to respond to the UE context modification request message. The UE context modification response message includes lower-layer configuration information (for example, RLC configuration information, MAC configuration information, and PHY configuration information) of a candidate cell. The information can be used by the terminal device 120 to perform an LTM switch and data transmission after the LTM switch is completed. The UE context modification response message includes contention-free random access configuration information 1.

It should be noted that each candidate cell may correspond to one UE context modification request message and one UE context modification response message. Therefore, the UE context modification request message in S802 and the UE context modification request message in S805 are merely used as general meanings, and are not used as a limitation on a quantity.

S806: The CU sends a DL RRC message transfer message to the DU 1.

For descriptions of S806, refer to the descriptions of S360. Details are not described herein again.

Optionally, the CU may send the UE context modification request message to the DU 1. The UE context modification request message includes an RRCReconfiguration message.

S807: The DU 1 sends the RRCReconfiguration message to the terminal device 120.

S808: The terminal device 120 sends an RRCReconfigurationComplete message to the DU 1.

S809: The DU 1 sends the RRCReconfigurationComplete message to the CU.

Optionally, the DU 1 may send the UE context modification response message to the CU, where the UE context modification response message includes the RRCReconfigurationComplete message.

For descriptions of S807 to S09, refer to the descriptions of S370 to S390. Details are not described herein again.

S8010: The DU 1 sends a command 1 to the terminal device 120.

Specifically, the command 1 is used to instruct the terminal device 120 to send a contention-free random access preamble 1 in a candidate cell 1. The command 1 may be a PDCCH order.

S8011: The terminal device 120 sends the contention-free random access preamble 1.

Specifically, the command 1 includes the contention-free random access configuration information 1. The terminal device 120 sends the contention-free random access preamble 1 in the candidate cell 1 based on the contention-free random access configuration information 1. For descriptions of the contention-free random access configuration information, refer to the descriptions of S410b.

Correspondingly, the DU 1 receives the contention-free random access preamble 1 in the candidate cell 1, and determines a TA of the candidate cell 1 based on receiving time of the contention-free random access preamble 1.

Optionally, in S8012, the DU 1 sends an RAR message 1 to the terminal device 120.

Correspondingly, the terminal device 120 receives the RAR message 1 from the DU 1. The RAR message 1 includes the TA of the candidate cell 1.

S8013: The terminal device 120 sends a measurement report of a candidate cell 2 to the DU 1.

S8014: The DU 1 determines the candidate cell 2 as a target cell of a switch.

Specifically, if the DU 1 receives the measurement report of the candidate cell 2, and determines, based on the measurement report of the candidate cell 2, that channel quality of the candidate cell 2 is better than channel quality of a serving cell, the DU 1 may determine the candidate cell 2 as the target cell of the switch.

S8015: The DU 1 sends an LTM command 1 to the terminal device 120.

Correspondingly, the terminal device 120 receives the LTM command 1 from the DU 1. The LTM command 1 includes an identifier of the target cell of the switch and TA information of the target cell. For descriptions of the TA information of the target cell, refer to the descriptions of the method 400. Details are not described herein again.

S8016: The DU 1 sends an LTM notification to the CU.

S8017: The DU 1 sends an access success message to the CU.

For descriptions of S8016 and S8017, refer to the descriptions of S3130 and S3140. Details are not described herein again.

In the method 800, both the candidate cell 1 and the candidate cell 2 belong to the DU 1, and the serving cell also belongs to the DU 1. The DU 1 needs to indicate the serving cell of the terminal device 120 to switch to the candidate cell 1 or the candidate cell 2. For ease of description, in this embodiment of this application, an example in which the serving cell of the terminal device 120 switches to the candidate cell 2 is used for description, but a scenario in which the serving cell of the terminal device 120 switches to the candidate cell 1 is not limited.

In conclusion, the DU 1, the CU, and the terminal device 120 perform the foregoing interaction procedure, so that the serving cell of the terminal device 120 switches to the target cell, where the target cell is the candidate cell 2. The terminal device 120 determines a TA of the candidate cell 2 based on a random access procedure for the candidate cell 1. Therefore, a random access procedure is prevented from being initiated in the candidate cell 2. In this way, a quantity of random access procedures that need to be initiated by the terminal device 120 can be reduced.

It may be understood that an execution sequence of the steps in the foregoing procedure is merely used as an example for understanding, and is not used as a final limitation. The foregoing procedure may further include a step that is not mentioned. For example, the CU indicates the DU 1 to release a communication resource of the serving cell.

It should be noted that a message type used in the foregoing procedure is merely used as an example, and another possible type is not limited.

It should be further noted that the method 800 may be used as a further description of the method 400.

FIG. 9 is a schematic interaction flowchart of a communication method 900 according to an embodiment of this application. The method 900 may be performed by a terminal device 120, the DU 1, the DU 2, and the CU, or may be performed by modules and/or components (for example, chips or integrated circuits) that are installed in the terminal device 120, the DU 1, the DU 2, and the CU and that have corresponding functions. This is not limited. The following uses an example in which the method 900 is performed by the terminal device 120, the DU 1, the DU 2, and the CU for description. As shown in FIG. 9, the method 900 includes the following steps.

S901: The terminal device 120 sends measurement report information to the DU 1.

S902: The DU 1 sends an UL RRC message transfer message to the CU.

S903: The CU determines to initiate an LTM configuration procedure.

For descriptions of S901 to S903, refer to the descriptions of S310 to S330. Details are not described herein again.

S904: The CU sends a UE context setup request message to the DU 2.

Specifically, the UE context setup request message includes a UE context setup request message 1 and a UE context setup request message 2. The UE context setup request message 1 includes an identifier of a candidate cell 1, and the UE context setup request message 1 includes an identifier of a candidate cell 2.

The UE context setup request message 1 is used to request the DU 2 to provide LTM configuration information 1 for the candidate cell 1, and the UE context setup request message 2 is used to request the DU 2 to provide LTM configuration information 2 for the candidate cell 2, so that the terminal device 120 can perform an LTM switch based on the LTM configuration information.

Optionally, the UE context setup request message 1 may further include indication information 7. The indication information 7 indicates or is used to request the DU 2 to provide contention-free random access configuration information 1 for the candidate cell 1, and contention-free random access configuration information is not requested to be provided for the candidate cell 2.

Optionally, when the UE context setup request message 1 excludes the indication information 7, the context setup request message 1 and the context setup request message 2 include trigger information of early RACHs for LTM corresponding to respective candidate cells. The trigger information of the early RACH for LTM is used by the DU 2 to provide contention-free random access configuration information for the candidate cell. For details, refer to the following descriptions.

Optionally, the UE context setup request message 1 may further include a group identifier of the candidate cell 1, and the UE context setup request message 2 may further include a candidate cell group identifier corresponding to the candidate cell 2. TAs of candidate cells located in candidate cells indicated by the group identifier are correlated. The group identifier of the candidate cell 1 and the group identifier of the candidate cell 2 are the same.

It should be noted that, when the CU determines that there is correlation between a TA of the candidate cell 1 and a TA of the candidate cell 2, the CU determines the indication information 7 and indication information 2. When the DU 2 determines that there is the correlation between the TA of the candidate cell 1 and the TA of the candidate cell 2, the DU 2 determines the indication information 2.

S905: The DU 2 sends a UE context setup response message to the CU.

Specifically, the UE context setup response message sent by the DU 2 to the CU includes a UE context setup response message 1 and a UE context setup response message 2. The UE context setup response message 1 corresponds to the UE context setup request message 1, and the UE context setup response message 2 corresponds to the UE context setup request message 2.

In a possible implementation, when the UE context setup request message 1 includes the indication information 7, the DU 2 determines, based on the indication information 7, to provide the contention-free random access configuration information 1 of the candidate cell 1 in the UE context setup response message 1. Correspondingly, when the UE context setup request message 2 excludes the indication information 7, the DU 2 does not provide the contention-free random access configuration information 2 of the candidate cell 2 in the UE context setup response message 2. The UE context setup response message 1 further includes the LTM configuration information 1 of the candidate cell 1, and the UE context setup response message 2 includes the LTM configuration information 2 of the candidate cell 2.

In another possible implementation, when the UE context setup request message 1 includes trigger information of an early RACH for LTM of the candidate cell 1, the DU 2 determines, based on the trigger information of the early RACH for LTM of the candidate cell 1, to provide the contention-free random access configuration information 1 for the candidate cell 1. Correspondingly, the UE context setup response message 1 includes the LTM configuration information 1 and the contention-free random access configuration information 1 of the candidate cell 1. When the UE context setup request message 2 includes trigger information of an early RACH for LTM of the candidate cell 2, the DU 2 determines a TA determining configuration of the candidate cell 2 based on the trigger information of the early RACH for LTM of the candidate cell 2 and configuration information provided by the contention-free random access configuration information of the candidate cell 1. For example, the TA determining configuration indicates that the TA of the candidate cell 2 is determined based on the TA of the candidate cell 1, to be specific, may be the foregoing indication information 2. In other words, the UE context setup request message 2 includes the indication information 2.

Optionally, rather than being based on the trigger information of the early RACH for LTM of the candidate cell, the DU 2 may determine to provide the contention-free random access configuration information 1 for the candidate cell 1 and determine the TA determining configuration information of the candidate cell 2 based on a requirement of the DU 2. Specifically, the UE context setup request message 1 includes the contention-free random access configuration information 1 of the candidate cell 1, and the UE context setup request message 2 includes the indication information 2.

In another implementation, if the DU 2 does not receive the indication information 7, the DU 2 determines to provide the contention-free random access configuration information 1 of the candidate cell 1 in the UE context setup response message 1.

It should be noted that for a logic or a process in which the DU 2 determines to configure the contention-free random access configuration information 1 for the candidate cell 1 and not to configure the contention-free random access configuration information 2 for the candidate cell 2, refer to the descriptions of the CU.

S906: The CU sends a UE context modification request message to the DU 1.

Specifically, the UE context modification request message includes the indication information 2, and the indication information 2 indicates to determine the TA of the candidate cell 2 based on the candidate cell 1. The indication information 2 may be determined by the CU, or may be determined by the DU 2 and forwarded by the CU. This is not limited. The UE context modification request message includes an RRCReconfiguration message.

Specifically, when the UE context setup request message 1 includes the indication information 7, the CU determines and sends the indication information 2 to the DU 1. When the UE context setup request message 1 and the UE context setup request message 2 include the trigger information of the early RACHs for LTM of the respective candidate cells, the DU 2 determines and sends the indication information 2 to the CU, and the CU forwards the indication information 2 to the DU 1.

S907: The DU 1 sends the RRCReconfiguration message to the terminal device 120.

S908: The terminal device 120 sends an RRCReconfigurationComplete message to the DU 1.

S909: The DU 1 sends the RRCReconfigurationComplete message to the CU.

For descriptions of S907 to S909, refer to the descriptions of S807 to S809. Details are not described herein again.

S9010: The DU 1 sends a command 1 to the terminal device 120.

Specifically, the command 1 is used to instruct the terminal device 120 to send a contention-free random access preamble 1 in the candidate cell 1.

S9011: The terminal device 120 sends the contention-free random access preamble 1.

Specifically, the command 1 includes the contention-free random access configuration information 1. The terminal device 120 sends the contention-free random access preamble 1 in the candidate cell 1 based on the contention-free random access configuration information 1. Correspondingly, the DU 2 receives the contention-free random access preamble 1 in the candidate cell 1.

Optionally, in S9012, the DU 2 sends an RAR message 2 to the terminal device 120.

Correspondingly, the terminal device 120 receives the RAR message 2. The RAR message 2 includes the TA of the candidate cell 1.

Optionally, the terminal device 120 may report a TA of a candidate cell #1 to the DU 1.

Optionally, the DU 1 may trigger the terminal device 120 to report the TA of the candidate cell 1.

S9013: The terminal device 120 sends a measurement report of a candidate cell 2 to the DU 1.

S9014: The DU 1 determines the candidate cell 2 as a target cell of a switch.

Specifically, if the DU 1 receives the measurement report of the candidate cell 2 from the terminal device 120, and determines, based on the measurement report of the candidate cell 2, that channel quality of the candidate cell 2 is better than channel quality of a serving cell, the DU 1 may determine the candidate cell 2 as the target cell of the switch.

S9015: The DU 1 sends an LTM command 1 to the terminal device 120.

Correspondingly, the terminal device 120 receives the LTM command 1. The LTM command 1 includes an identifier of the target cell of the switch and TA information of the target cell. For descriptions of the TA information of the target cell, refer to the foregoing descriptions.

S9016: The DU 1 sends an LTM notification to the CU.

S9017: The DU 2 sends an access success message to the CU.

For descriptions of S9016 and S9017, refer to the descriptions of S3130 and S3140. Details are not described herein again.

In the method 900, both the candidate cell 1 and the candidate cell 2 belong to the DU 2, and the serving cell belongs to the DU 1. The DU 1 needs to indicate the serving cell of the terminal device 120 to switch to the candidate cell 1 or the candidate cell 2. For ease of description, in this embodiment of this application, an example in which the serving cell of the terminal device 120 switches to the candidate cell 2 is used for description, but a scenario in which the serving cell of the terminal device 120 switches to the candidate cell 1 is not limited.

In conclusion, the DU 1, the DU 2, the CU, and the terminal device 120 perform the foregoing interaction procedure, so that the serving cell of the terminal device 120 switches to the target cell, where the target cell is the candidate cell 2. The terminal device 120 determines the TA of the candidate cell 2 based on a random access procedure for the candidate cell 1. Therefore, a random access procedure is prevented from being initiated in the candidate cell 2. In this way, a quantity of random access procedures that need to be initiated by the terminal device 120 can be reduced.

It may be understood that an execution sequence of the steps in the foregoing procedure is merely used as an example for understanding, and is not used as a final limitation. The foregoing procedure may further include a step that is not mentioned. For example, the CU indicates the DU 1 to release a communication resource of the serving cell.

It should be noted that a message type used in the foregoing procedure is merely used as an example, and another possible type is not limited.

It should be further noted that the method 900 may be used as a further description of the method 500.

It should be further noted that the method 900 may be further applied to a scenario of interaction between base stations. For example, the DU 1 and the CU belong to a base station 1, and the DU 2 belongs to a base station 2. For a method for interaction between base stations, refer to the method for interaction inside the base station. Details are not described herein again. When the method 800 is applied to the scenario of interaction between base stations, a name of the foregoing message may be changed. For example, the UE context setup request message is changed to a HO (handover) request, and the UE context setup response message is changed to a HO response.

FIG. 10 is a schematic interaction flowchart of a communication method 1000 according to an embodiment of this application. The method 1000 may be performed by a terminal device 120, the DU 1, the DU 2, and the CU, or may be performed by modules and/or components (for example, chips or integrated circuits) that are installed in the terminal device 120, the DU 1, the DU 2, and the CU and that have corresponding functions. This is not limited. The following uses an example in which the method 1000 is performed by the terminal device 120, the DU 1, the DU 2, and the CU for description. As shown in FIG. 10, the method 1000 includes the following steps.

For S1001 to S1005, refer to the descriptions of S901 to S905. Details are not described herein again.

It should be noted that a UE context setup response message 1 in S1050 includes frequency information 1 and/or an SCS 1 of a candidate cell 1, and a UE context setup response message 2 includes frequency information 2 and/or SCS information 2 of a candidate cell 2.

For descriptions of the frequency and/or the SCS of the candidate cell, refer to the descriptions of the method 500. The frequency and/or the SCS of the candidate cell may be used by the DU 1 to determine to trigger the terminal device 120 to initiate a random access procedure for the candidate cell 1.

S1006: The CU sends a UE context modification request message to the DU 1.

Specifically, the UE context modification request message includes the indication information 2, the frequency information 1 and/or the SCS information 1 of the candidate cell 1, and the frequency information 2 and/or the SCS information 2 of the candidate cell 2. The UE context modification request message includes an RRCReconfiguration message.

It should be noted that the UE context modification request message in S1060 may exclude contention-free random access configuration information 1 of the candidate cell 1 and contention-free random access configuration information 2 of the candidate cell 2. Correspondingly, the DU 1 requests the DU 2 for the contention-free random access configuration information 1 of the candidate cell 1 based on the frequency information and/or the SCS information.

S1007: The DU 1 sends the RRCReconfiguration message to the terminal device 120.

S1008: The terminal device 120 sends an RRCReconfigurationComplete message to the DU 1.

S1009: The DU 1 sends the RRCReconfigurationComplete message to the CU.

For descriptions of S1006 to S1009, refer to the descriptions of S906 to S909. Details are not described herein again.

S1010: The DU 1 sends a command 1 to the terminal device 120.

Specifically, the command 1 is used to instruct the terminal device 120 to send a contention-free random access preamble 1 in the candidate cell 1. For details of S1010, refer to the descriptions of the frequency information and/or the SCS information in the method 500.

S1011: The terminal device 120 sends the contention-free random access preamble 1.

For descriptions of S1011, refer to the descriptions of S9011.

Optionally, in S1012, the DU 2 sends an RAR message 3 to the terminal device 120.

For descriptions of S1012, refer to the descriptions of S9012.

S1013: The terminal device 120 sends a measurement report of the candidate cell 2 to the DU 1.

S1014: The DU 1 determines the candidate cell 2 as a target cell of a switch.

For descriptions of S1014, refer to the descriptions of S9014.

S1015: The DU 1 sends an LTM command 1 to the terminal device 120.

For descriptions of S1015, refer to the descriptions of S9015.

S1016: The DU 1 sends an LTM notification to the CU.

S1017: The DU 2 sends an access success message to the CU.

For descriptions of S1016 and S1017, refer to the descriptions of S3130 and S3140. Details are not described herein again.

In the method 1000, both the candidate cell 1 and the candidate cell 2 belong to the DU 2, and a serving cell belongs to the DU 1. The DU 1 needs to indicate the serving cell of the terminal device 120 to switch to the candidate cell 1 or the candidate cell 2. For ease of description, in this embodiment of this application, an example in which the serving cell of the terminal device 120 switches to the candidate cell 2 is used for description, but a scenario in which the serving cell of the terminal device 120 switches to the candidate cell 1 is not limited.

In conclusion, the DU 1, the DU 2, the CU, and the terminal device 120 perform the foregoing interaction procedure, so that the terminal device 120 switches from the serving cell to the target cell, where the target cell is the candidate cell 2. The terminal device 120 determines a TA of the candidate cell 2 based on the random access procedure for the candidate cell 1. Therefore, a random access procedure is prevented from being initiated in the candidate cell 2. In this way, a quantity of random access procedures that need to be initiated by the terminal device 120 can be reduced.

It may be understood that an execution sequence of the steps in the foregoing procedure is merely used as an example for understanding, and is not used as a final limitation. The foregoing procedure may further include a step that is not mentioned. For example, the CU indicates the DU 1 to release a communication resource of the serving cell.

It should be noted that a message type used in the foregoing procedure is merely used as an example, and another possible type is not limited.

It should be further noted that the method 1000 may be used as a further description of the method 500.

It should be further noted that the method 1000 may be further applied to a scenario of interaction between base stations. For example, the DU 1 and the CU belong to a base station 1, and the DU 2 belongs to a base station 2. For a method for interaction between base stations, refer to the method for interaction inside the base station. Details are not described herein again. When the method 1000 is applied to the scenario of interaction between base stations, a name of the foregoing message may be changed. For example, a UE context setup request message is changed to a HO (handover) request, and a UE context setup response message is changed to a HO response.

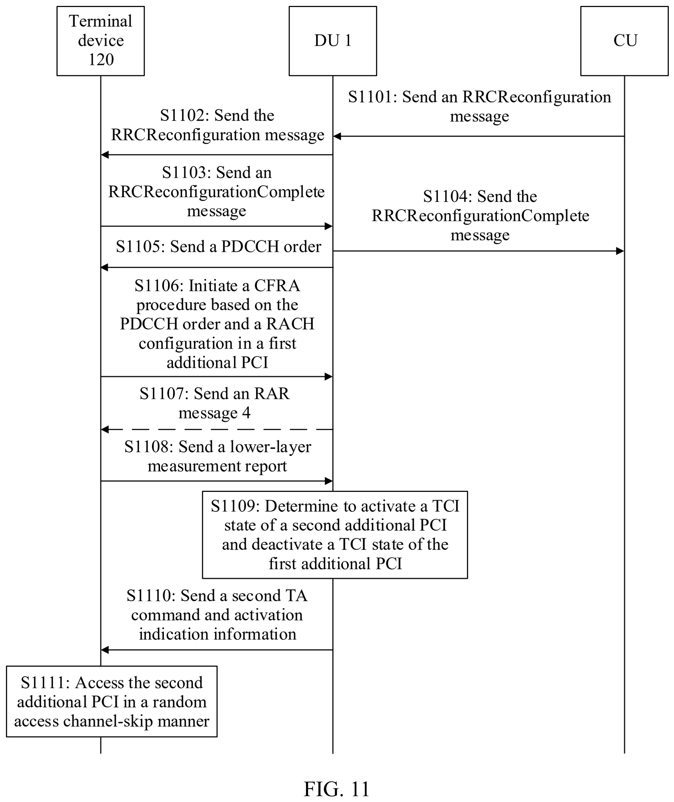

In embodiments of this application, the method 400 to the method 1000 may be applied to a switch field of a candidate cell, and may also be applied to a switch field of a physical cell identifier (physical cell identifier, PCI). Specifically, one cell may be associated with a plurality of PCIs, and the plurality of PCIs include one serving PCI and a plurality of additional (additional) PCIs. For details, refer to FIG. 11.

FIG. 11 is a schematic interaction flowchart of a communication method 1100 according to an embodiment of this application. The method 1000 may be performed by a terminal device 120, a DU 1, and a CU, or may be performed by modules and/or components (for example, chips or integrated circuits) that are installed in the terminal device 120, the DU 1, and the CU and that have corresponding functions. This is not limited. The following uses an example in which the method 1100 is performed by the terminal device 120, the DU 1, and the CU for description. As shown in FIG. 11, the method 1100 includes the following steps.

S1101: The CU sends an RRCReconfiguration message to the DU 1.

Correspondingly, the DU 1 receives the RRCReconfiguration message from the CU. The RRCReconfiguration message includes configuration information of a plurality of additional PCIs (for example, configuration information of a first additional PCI and configuration information of a second additional PCI, or configuration information of a reference signal (reference signal, RS)). The plurality of additional PCIs correspond to a same serving PCI. The configuration information of the first additional PCI includes a RACH configuration.

S1102: The DU 1 sends the RRCReconfiguration message to the terminal device 120.

Specifically, the terminal device 120 receives the RRCReconfiguration message by using a transmission configuration indicator (transmission configuration indicator, TCI) state (state) of the serving PCI or the first additional PCI.

S1103: The terminal device 120 sends an RRCReconfigurationComplete message to the DU 1.

S1104: The DU 1 sends the RRCReconfigurationComplete message to the CU.

S1105: The DU 1 sends a PDCCH order to the terminal device 120.

Correspondingly, the terminal device 120 receives the PDCCH order from the DU 1. The PDCCH order is used to trigger a contention-free random access procedure. The PDCCH order includes a preamble and time-frequency resource information of the contention-free random access procedure. For details, refer to the foregoing descriptions of the PDCCH order.

S1106: The terminal device 120 initiates a contention-free random access preamble to the DU 1 based on the PDCCH order and the RACH configuration in the first additional PCI.

Specifically, the terminal device 12 sends, to the DU 1 based on the PDCCH order and the RACH configuration in the first additional PCI, the contention-free random access preamble used to determine a TA of the first additional PCI. For description details of the process, refer to the foregoing descriptions that the terminal device 120 sends the contention-free random access preamble in the candidate cell 1. The two descriptions are the same. Therefore, details are not described again.

S1107: The terminal device 120 receives an RAR message 4.

Specifically, the DU 1 determines the TA of the first additional PCI based on the contention-free random access preamble sent by the terminal device 120. Correspondingly, the DU 1 sends the RAR message 4 including the TA of the first additional PCI to the terminal device 120. The RAR message 4 includes a first TA command, and the first TA command includes a first absolute TA value. More specifically, the first absolute TA value is an absolute TA value of the first additional PCI.

S1108: The terminal device 120 sends a lower-layer measurement report to the DU 1, where the measurement report includes a measurement result of a TCI state of the second additional PCI.

S1109: The DU 1 determines to activate the TCI state of the second additional PCI.

Specifically, the DU 1 determines, based on the lower-layer measurement report reported by the terminal device 120, that channel quality of the second additional PCI is better than channel quality of the first additional PCI, and the DU 1 determines, based on the lower-layer measurement report, to activate the TCI state of the second additional PCI and deactivate the TCI state of the first additional PCI.

Specifically, a same DU manages two different PCIs: a PCI #1 and a PCI #2. If the PCI #1 and the PCI #2 are co-antenna PCIs, it is determined that there is correlation between a TA of the PCI #1 and a TA of the PCI #1. The correlation may be as follows: For a same terminal device, the TA of the PCI #1 and the TA of the PCI #1 are the same, or an absolute value of a difference between the TA of the PCI #1 and the TA of the PCI #2 is less than a threshold. The threshold may be a CP length of the PCI #1 or the PCI #2, or another value. The first additional PCI may be the PCI #1, and the second additional PCI may be the PCI #2. Therefore, there is the correlation between the TA of the first additional PCI and the TA of the second additional PCI. Therefore, the DU 1 determines the TA of the second additional PCI based on the foregoing correlation and the contention-free random access preamble that is sent by the terminal device 120 and that is used to determine the TA of the first additional PCI.

S1110: The DU 1 sends a second TA command and activation indication information to the terminal device 120.

Specifically, the activation indication information (or TCI state indication for PDCCH) is used to activate the TCI state of the second additional PCI, and the second TA command is used to indicate the TA of the second additional PCI.

It should be noted that the terminal device 120 does not initiate a RACH in the second additional PCI. The second TA command includes a relative TA of the first TA or an absolute TA. If the second TA command is the absolute TA, the absolute TA and the first TA are the same. If the second TA command is the relative TA, the relative TA is equal to 0, in other words, the TA of the second additional PCI and the first TA are the same.

S1111: The terminal device 120 accesses the second additional PCI in a random access channel-skip manner.

According to the foregoing technical solution, in this application, a network device does not need to trigger the terminal device to initiate a random access procedure for an additional PCI that needs to be accessed. In this way, a quantity of random access procedures that need to be initiated by the terminal device can be reduced.

It should be noted that, for another technical solution of PCI switching, refer to the foregoing method. Details are not described herein again.

It should be noted that the method 1100 and both the method 400 and the method 800 are similar technical solutions, and a difference between the method 1100 and both the method 400 and the method 800 lies in that the method 1100 is for a PCI switching scenario, and the method 400 and the method 800 are for a candidate cell switch scenario. However, the two are related or similar in terms of the technical solutions. Therefore, the technical solutions or procedure steps described in the method 1100 are merely used as examples for understanding. Technical solution extension and the like may be obtained with reference to the descriptions of the method 400 and the method 800. This is not limited.

The following further describes the technical solutions in this application.

A switch is a very important feature in a 5G system, and is mainly triggered by movement of a terminal device in a radio resource control (radio resource control, RRC) connected state. A basic objective of the switch is to switch the terminal device to a neighboring cell with good signal quality before signal quality of a serving cell becomes unavailable for communication, to provide a continuous uninterrupted communication service, and effectively prevent a call drop caused by deterioration of the serving cell.

In a 5G RAN architecture, functions of a base station are divided into two functional units: a distributed unit (DU) responsible for processing high real-time performance, for example, processing functions at a radio link control (radio link control, RLC) layer, a media access control (media access control, MAC) layer, and a physical layer (physical layer, PHY), and a central unit (CU) responsible for processing non-real-time performance, for example, functions at layers such as a service data convergence protocol (service data convergence protocol, SDCP) SDAP, an RRC layer, or a packet data convergence protocol (packet data convergence protocol, PDCP) layer. The CU communicates with the DU through an F1 interface, and a maximum transmission delay is approximately 3 ms to 10 ms.

In an existing version, a layer 3 (L3) handover (L3 handover) means that a CU receives a measurement result of a terminal device 120, where the measurement result is forwarded to the CU by a DU. The CU determines, based on the measurement result, whether to initiate a handover, for example, a serving cell is poor. In addition, the CU sends a handover command to the DU, and then, the DU sends the handover command to the terminal device 120. There are some interactions over a F1 interface, and there is a handover delay.

To reduce the handover delay, LTM is entered. A switch decision is delivered from the CU to the DU, to reduce F1 interactions. The DU determines, based on the measurement result of the terminal device 120, whether to initiate the switch (LTM cell switch). The switch mainly includes an intra-DU switch and an inter-DU switch. In addition, the DU directly sends the switch command to the terminal device 120. An inter-CU switch is still implemented using an existing L3 handover.

Currently, an inter-DU LTM procedure and an intra-DU procedure shown in FIG. 3 have been introduced. It may be understood that a difference between the intra-DU procedure and the inter-DU LTM procedure shown in FIG. 3 lies in that the DU 1 and the DU 2 belong to a same body, and interaction between the DU 1 and the DU 2 is not involved. For interaction between the CU, the DU, and the UE, refer to the descriptions in FIG. 3.

When a target gNB-DU detects access of the terminal device 120, a solution is random access. To be specific, random access is performed after the LTM, and the target gNB-DU may learn of access of the terminal device 120. The other solution is random access channel-less (RACH-less or RACH-skip), for example, access is performed through a PUSCH or a PUCCH. Specific information may need to be carried to indicate access of a network device and the terminal. An application scenario of this application is mainly the latter solution.

To enable the terminal device 120 to access the target gNB-DU in a random access channel-less manner, the terminal device 120 needs to obtain a TA before receiving an LTM command. The TA is a command sent by the base station to the terminal device 120 to adjust uplink transmission of the terminal device 120. The process may include: The terminal device 120 sends an uplink symbol in advance according to a command transmitted through the PUSCH, the PUCCH, and an SRS, and the base station sends a timing advance command (Timing Advance Command, TAC) to notify the terminal device 120 of an amount of time by which uplink transmission needs to be advanced.

It may be understood that, before receiving the LTM command, the terminal device 120 maintains communication with a source cell, and performs a random access procedure for at least one candidate cell. Therefore, a network device or the terminal device 120 obtains TA information of the at least one candidate cell. After receiving the LTM command, where the LTM command indicates a target cell, and the target cell is one of the at least one candidate cell, the terminal device 120 may perform access based on the pre-obtained TA and through a dedicated PUSCH or PUCCH. The dedicated PUSCH or PUCCH means that the base station indicates a PUSCH or PUCCH resource of the terminal device 120 via dedicated signaling.

Before the LTM command is received, the random access procedure initiated by the terminal device 120 is contention-free random access, and mainly includes the following several types:

### First type:

1. The terminal device 120 sends a contention-free random access (CFRA) preamble to a candidate DU. The network device determines a TA based on the CFRA preamble.
2. The terminal device 120 receives an RAR from the candidate DU, where the RAR includes a TA command. The terminal device 120 receives the RAR, and determines that random access is completed.

After random access, a source DU initiates an LTM switch, and the source DU sends an LTM switch command to the terminal device 120, where the LTM switch command does not need to carry the TA command.

### Second type:

1. The terminal device 120 sends a CFRA preamble to a candidate DU, and the network device determines a TA based on the CFRA preamble.
2. The terminal device 120 receives an RAR of the candidate DU from a source DU, where the RAR includes a TA command. The candidate DU sends the RAR to the source DU, and the source DU sends the RAR to the terminal device 120. The terminal device 120 receives the RAR, and determines that random access is completed.

After random access, the source DU initiates an LTM switch, and the source DU sends an LTM switch command to the terminal device 120, where the LTM switch command does not need to carry the TA command.

### Third type:

1. The terminal device 120 sends a CFRA preamble to a candidate DU. The candidate DU determines a TA based on the CFRA preamble, and sends the TA to a source DU. The terminal device 120 determines that random access is completed. There is no RAR in this solution.

After random access, the source DU determines to initiate an LTM switch, and the source DU sends an LTM switch command to the terminal device 120, where the LTM switch command needs to carry a TA command, and a TA value in the TA command is obtained through CFRA.

It can be learned that, before receiving the LTM command, the terminal device 120 maintains communication with the source cell, and initiates random access for the at least one candidate cell. As a result, excessive unnecessary random access is initiated. In some scenarios (for example, in a scenario in which the source cell and a candidate target cell are inter-frequency cells), a small amount of interruption occurs in the source cell.

Therefore, to reduce the unnecessary random access, reduce signaling overheads, and reduce interruption, this application provides a communication method. In the method, for a plurality of candidate cells, UE initiates random access once. For example, the plurality of candidate cells send and receive signals through a same transmission reception point TRP. Therefore, TAs of the plurality of candidate cells are the same, or may be shared.

For example, (a) a random access configuration is provided for a candidate cell through inter-base station negotiation; and (b) in a scenario in which a plurality of random access configurations are provided (different random access configurations correspond to different candidate cells), the source DU or the candidate DU determines, based on frequency information or BWP information, a candidate cell for which a random access procedure is to be initiated.

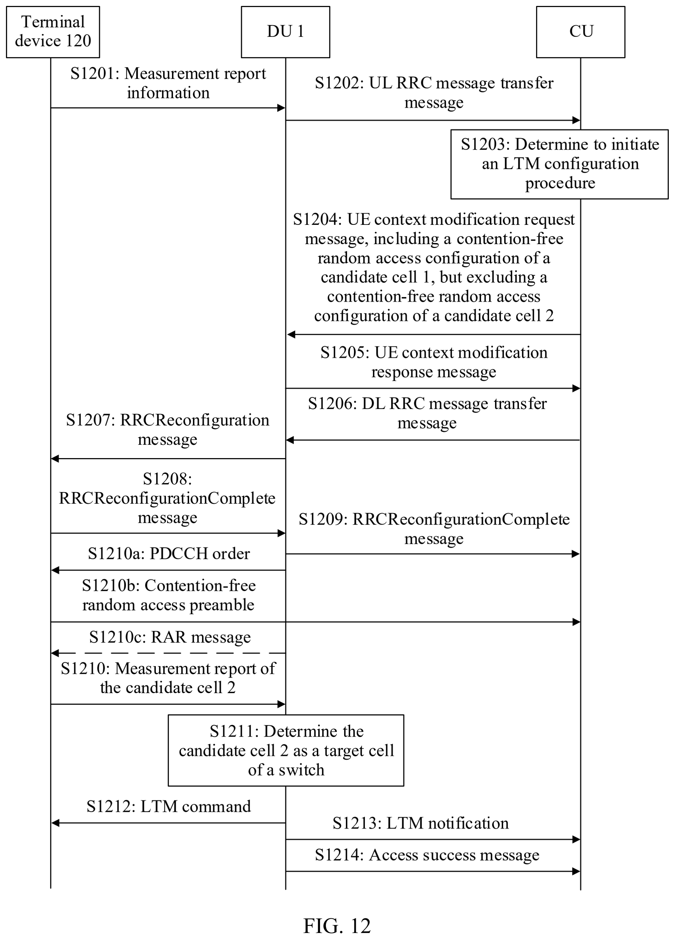

For example, in a procedure shown in FIG. 12, in an intra-DU scenario, a candidate cell (which may be a candidate cell #1 below) managed by a DU 1 has an LTM CFRA resource, and no LTM CFRA resource is allocated to another candidate cell (for example, a candidate cell #2). A TA indicated by an LTM command and a TA of the candidate cell #1 are the same when a source cell switches to the candidate cell #2. FIG. 12 includes the following steps.

For S1201 to S1209, refer to the steps corresponding to FIG. 3 and FIG. 8.

It should be noted that, in S1205, both the candidate cell #1 and the candidate cell #2 are cells of the DU 1, a configuration of the candidate cell #1 includes a contention-free random access configuration, and the candidate cell #2 may exclude a contention-free random access configuration. An LTM contention-free random access configuration includes an LTM contention-free random access preamble and/or an LTM contention-free random access time-frequency resource. A terminal device 120 may be uniquely identified by using the preamble and/or the time-frequency resource. Optionally, the LTM contention-free random access configuration includes an SSB or a CSI-RS corresponding to the preamble or the time-frequency resource.

S1210a: The DU 1 sends a PDCCH order to the terminal device 120 based on a CFRA configuration of the candidate cell #1, where the PDCCH order indicates the terminal device 120 to send contention-free random access to a first candidate cell.

The PDCCH order includes indication information of the LTM contention-free preamble and indication information of the time-frequency resource.

S1210b: The terminal device 120 sends, in the candidate cell #1, the contention-free random access preamble to the DU 1 based on the PDCCH order.

The DU 1 determines a TA of the candidate cell #1 based on the contention-free random access preamble, and further determines a TA of the candidate cell #2. For example, because a transmit antenna and a receive antenna are the same, the DU 1 determines that the TA of the candidate cell #1 and/or the TA of the candidate cell #2 are/is the same, in other words, TA values are the same.

S1210c: The DU 1 sends an RAR to the terminal device 120, where the RAR carries the TA (an absolute TA value) of the candidate cell #1.

Step 1210c is an optional step, and may not be performed.

S1210: The terminal device 120 sends a measurement report of the candidate cell #2 to the DU 1, where the measurement report includes a reference signal received power (reference signal received power, RSRP) of the candidate cell #2.

S1211: The DU 1 determines the candidate cell #2 as a target cell of a switch, where the candidate cell #2 is a cell different from the candidate cell #1.

S1212: The DU 1 sends an LTM command to the terminal device 120, where the LTM command is used to instruct to switch to the target cell. For example, a switch command includes an identifier of the target cell, and the identifier of the target cell is an identifier of the candidate cell #2 (for example, a cell index).

In an example, the switch command further includes the TA of the candidate cell #2. Alternatively, the switch command includes indication information indicating to determine the TA of the candidate cell #2 based on the TA of the candidate cell #1, and the indication information may be, for example, an identifier of the candidate cell #1.

For S1213 and S1214, refer to the steps corresponding to FIG. 3 and FIG. 8.

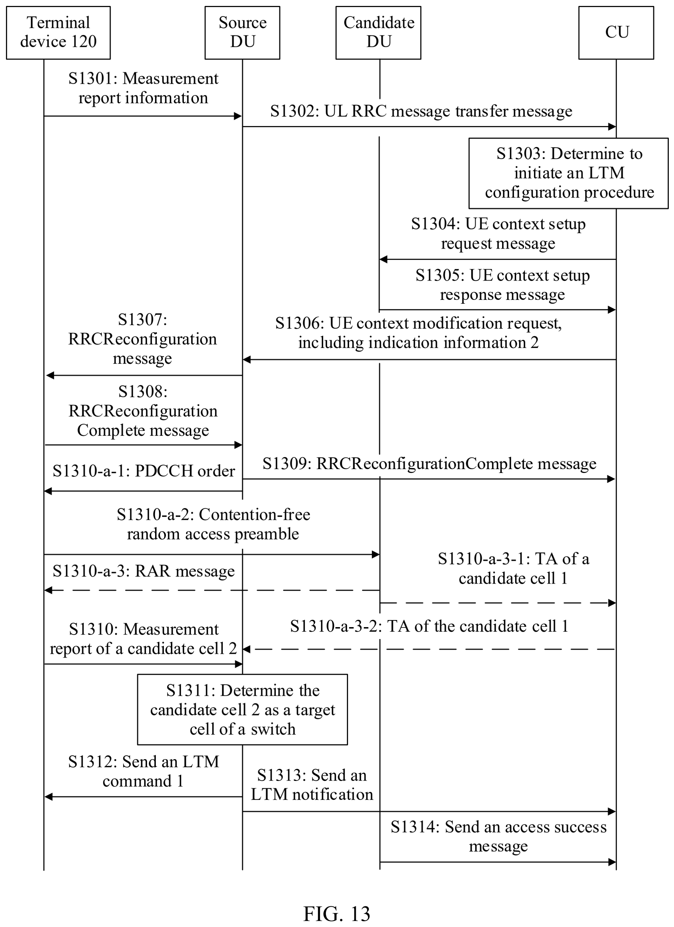

For example, in a procedure shown in FIG. 13, in an inter-DU scenario, a CU determines a candidate cell (for example, a candidate cell #1) for which an LTM CFRA configuration needs to be provided and a candidate cell (for example, including a candidate cell #2) for which an LTM CFRA configuration is not provided. The CU sends an LTM CFRA required indication to a candidate DU, so that the candidate DU learns of a candidate cell for which a CFRA configuration needs to be provided. FIG. 13 includes the following steps.

In an example, the CU determines a cell group for TA acquisition. The cell group includes a candidate cell with an LTM CFRA configuration, and also includes a cell without an LTM CFRA configuration. The CU sends, to a source DU, information indicating that candidate cells belong to a same cell group. The source DU further determines, based on a TA of the candidate cell with the CFRA configuration, a TA of the candidate cell without the CFRA configuration. FIG. 13 includes the following steps.

For S1301 to S1303, refer to the steps corresponding to FIG. 3 and FIG. 9.

S1304: The CU determines that an LTM CFRA configuration is provided for the candidate cell #1, and sends a first UE context setup request to the candidate DU, where the request includes an identifier of the candidate cell #1 and an LTM CFRA required indication.

The CU determines that an LTM CFRA configuration is not provided for the candidate cell #2, and sends a second UE context setup request to the candidate DU, where the request includes an identifier of the candidate cell #2, but excludes an LTM CFRA required indication.

S1305: The candidate DU sends a configuration of the candidate cell #1 to the CU in a first UE context setup response. The configuration of the candidate cell #1 includes an LTM CFRA configuration (a DU configuration) of a terminal device 120, and may further include a configuration of an LTM cell (or a configuration of an LTM cell group) (a UE configuration) of the terminal device 120. The configuration of the LTM cell may include, for example, RLC configuration information, MAC configuration information, and PHY configuration information. Based on the configuration of the LTM cell, the terminal device 120 may perform an LTM switch to a corresponding cell and data transmission after the LTM switch. The configuration of the LTM cell group may include, for example, RLC configuration information, MAC configuration information, and PHY configuration information on a cell group basis. Based on the configuration of the LTM cell, the terminal device 120 may perform an LTM switch to a cell in a cell group and data transmission after the LTM switch.

The DU configuration indicates that the configuration information is finally provided for the source DU, or can be read by the source DU. The UE configuration indicates that the configuration is provided for the terminal device 120, or can be read by the terminal device 120.

The candidate DU may provide the CFRA configuration of the corresponding candidate cell based on the CFRA required indication. In a second UE context setup response, the candidate DU sends a configuration of the candidate cell #2 to the CU. The configuration of the candidate cell #2 excludes a CFRA configuration (a DU configuration), but may include a configuration of an LTM cell (or a configuration of an LTM cell group) (a UE configuration). In other words, the candidate DU does not provide a CFRA resource corresponding to a candidate cell without a CFRA required indication.

S1306: The CU sends a UE context modification request to the source DU.

The request may include the configuration (the UE configuration) of the candidate cell #1, the configuration (the UE configuration) of the candidate cell #2, the LTM CFRA configuration (the DU configuration) of the candidate cell #1 of the terminal device (the configuration may be included in the configuration of the candidate cell #1), and indication information. The indication information indicates to determine a TA of the candidate cell #2 based on the candidate cell #1.

For example, possible indication information indicates that the candidate cell #1 and the candidate cell #2 belong to a same TA cell group (in one cell group, the source DU may determine that TAs of the candidate cell #1 and the candidate cell #2 are the same). Alternatively, a plurality of candidate cell identifiers may be carried, for example, the identifier of the candidate cell #1 and an identifier of a target cell. The identifier of the target cell is the identifier of the candidate cell #2.

For S1307 to S1309, refer to the steps corresponding to FIG. 3.

S1310-a-1: The source DU determines, based on the LTM CFRA configuration of the candidate cell #1, to trigger a PDCCH order, to indicate the terminal device 120 to send an LTM CFRA preamble to the candidate cell #1.

The PDCCH order includes indication information of the LTM contention-free random access preamble and indication information of a time-frequency resource.

S1310-a-2: The terminal device 120 sends the contention-free random access preamble to the candidate DU in the candidate cell #1 based on the PDCCH order.

The candidate DU determines the TA of the candidate cell #1 based on the contention-free random access preamble.

In S1310-a-3-1 and S1310-a-3-2, the candidate DU sends the TA of the candidate cell #1 to the source DU, and the CU may forward the TA of the candidate cell #1 to the source DU.

The source DU determines the TA of the candidate cell #2 based on the indication information and the TA of the candidate cell #1. The TA of the candidate cell #2 and the TA of the candidate cell #1 are the same, in other words, TA values are the same.

S1310-a-3: The candidate DU sends an RAR to the terminal device 120, where the RAR carries the TA (for example, an absolute TA value) of the candidate cell #1.

It should be noted that, after S1310-a-2, S1310-a-3-1 and S1310-a-3-2 may be performed, or S1310-a-3 may be performed.

S1310: The terminal device 120 sends a measurement report of the candidate cell #2 to the source DU, where the measurement report includes an RSRP of the candidate cell #2.

S1311: The source DU determines the candidate cell 2 as the target cell of a switch.

S1312: The source DU sends an LTM command to the terminal device 120, where the command includes the identifier of the candidate cell #2 (a cell index), and optionally, may further include TA indication information (for example, TA info).

The TA indication information may include a solution 1 and a TA value (the TA value and a TA value of the candidate cell #1 are the same), or a solution 2 and the identifier of the candidate cell #1 (for example, the identifier of the candidate cell #1 indicates that the TA of the candidate cell #2 is determined based on the TA of the candidate cell #1, a network device considers that the TA values of the two cells are the same, and further, the terminal device 120 is also known that the TA values of the two cells are the same).

The solution 1 is applicable to a scenario in which S1310-a-3-1 and S1310-a-3-2 are performed, and the solution 2 is applicable to a scenario in which S1310-a-3 is performed. The TA of the candidate cell #2 and the TA of the candidate cell #1 are the same.

For S1313 and S1314, refer to the steps corresponding to FIG. 3 and FIG. 9.

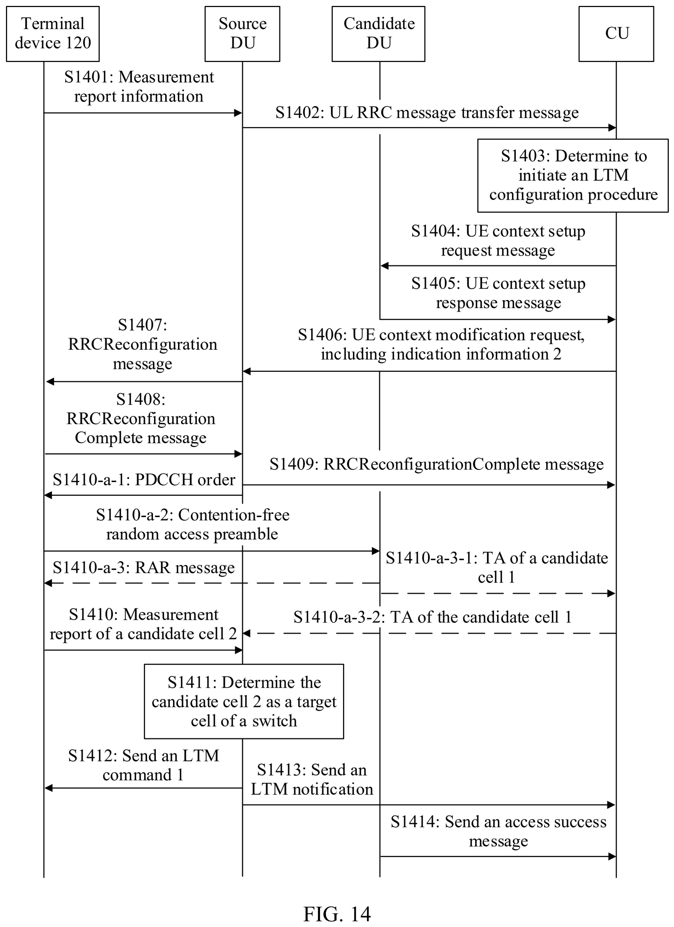

For example, in a procedure shown in FIG. 14, in an inter-DU scenario, a candidate DU determines a candidate cell (for example, a candidate cell #1) for which an LTM CFRA configuration needs to be provided. In a configuration of another candidate cell (for example, including a candidate cell #2), it is indicated that the candidate cell and the candidate cell #1 are associated with a TA. For example, TA values may be the same or a same TA value may be shared.

In an example, the candidate DU determines a cell group for TA acquisition. The cell group includes a candidate cell with an LTM CFRA configuration, and also includes a cell without an LTM CFRA configuration. The candidate DU sends, to a source DU, info indicating that candidate cells belong to a same cell group. The source DU further determines, based on a TA of the candidate cell with the CFRA configuration, a TA of the candidate cell without the LTM CFRA configuration. FIG. 14 includes the following steps.

For S1401 to S1403, refer to the steps corresponding to FIG. 3 and FIG. 9.

S1404: A CU sends a setup request of the candidate cell #1 or a setup request of the candidate cell #2 to the candidate DU.

Optionally, a setup request of each cell may include trigger information of a respective early RACH for LTM.

S1405: The candidate DU includes a configuration of the respective candidate cell in a UE context setup response message of the candidate cell #1 or a UE context setup response message of the candidate cell #2.

For example, the configuration of the candidate cell #1 includes a UE configuration and a DU configuration, and the configuration of the candidate cell #2 includes a UE configuration and a DU configuration. The UE configurations of the candidate cell #1 and the candidate cell #2 each include an LTM cell configuration (or an LTM cell group configuration), the DU configuration of the candidate cell #1 includes an LTM CFRA configuration of the candidate cell #1, and the DU configuration of the candidate cell #2 includes a TA determining configuration of the candidate cell #2.

Specifically, for the DU configuration of the candidate cell #1, the candidate DU may determine, based on trigger information of an early RACH for LTM of the candidate cell #1, to provide the LTM CFRA configuration for the candidate cell #1, and determine the TA determining configuration of the candidate cell #2 based on trigger information of an early RACH for LTM of the candidate cell #2 and the LTM CFRA configuration of the candidate cell #1. For example, the determining configuration indicates that a TA of the candidate cell # 2 may be determined based on a TA of the candidate cell # 1 (the TAs of the candidate cell #1 and the candidate cell #2 are the same).

In another example, the candidate DU may not determine a configuration based on the trigger information of the respective candidate cell, but determine the LTM CFRA configuration and the TA determining configuration based on a requirement of the candidate DU. Specifically, the DU configuration of the candidate cell #2 includes first indication information. The first indication information indicates to determine the TA of the candidate cell #2 based on the TA of the candidate cell #1, for example, indicates that the TAs of the candidate cell #1 and the candidate cell #2 may be the same or belong to a same TA candidate cell group, or the DU configuration of the candidate cell #2 includes an LTM CFRA configuration identifier same as that of the candidate cell #1.

S1406: The CU sends the configuration of the candidate cell #1 (including the CFRA configuration) and the configuration of the candidate cell #2 (excluding the CFRA, and optionally including the first indication information) to the candidate DU.

For S1407 to S1409, refer to the steps corresponding to FIG. 3 and FIG. 9.

S1410-a-1: The source DU determines, based on the LTM CFRA configuration of the candidate cell #1, to trigger a PDCCH order, to indicate the terminal device to send an LTM CFRA preamble to the candidate cell #1.

The PDCCH order includes indication information of the LTM contention-free random access preamble and indication information of a time-frequency resource.

S1410-a-2: The terminal device 120 sends the contention-free random access preamble to the candidate DU in the candidate cell #1 based on the PDCCH order.

The candidate DU determines the TA of the candidate cell #1 based on the contention-free random access preamble.

In S1410-a-3-1 and S1410-a-3-2, the candidate DU sends the TA of the candidate cell #1 to the source DU, and the CU may forward the TA of the candidate cell #1 to the source DU.

The source DU determines the TA of the candidate cell #2 based on the indication information and the TA of the candidate cell #1. The TA of the candidate cell #2 and the TA of the candidate cell #1 are the same, in other words, TA values are the same.

S1410-a-3: The candidate DU sends an RAR to the terminal device 120, where the RAR carries the TA (for example, an absolute TA value) of the candidate cell #1.

After S1410-a-2, S1410-a-3-1 and S1410-a-3-2 may be performed, or S1410-a-3 may be performed.

S1410: The terminal device 120 sends a measurement report of the candidate cell #2 to the source DU, where the measurement report includes an RSRP of the candidate cell #2.

S1411: The source DU determines the candidate cell 2 as a target cell of a switch.

S1412: The source DU sends an LTM command to the terminal device 120, where the command includes an identifier of the candidate cell #2 (a cell index), and optionally, may further include TA indication information (for example, TA info).

The TA indication information may include a solution 1 and a TA value (the TA value and a TA value of the candidate cell #1 are the same), or a solution 2 and an identifier of the candidate cell #1 (for example, the identifier of the candidate cell #1 indicates that the TA of the candidate cell #2 is determined based on the TA of the candidate cell #1, a network device considers that the TA values of the two cells are the same, and further, the terminal device 120 is also known that the TA values of the two cells are the same).

The solution 1 is applicable to a scenario in which S1410-a-3-1 and S1410-a-3-2 are performed, and the solution 2 is applicable to a scenario in which S1410-a-3 is performed. The TA of the candidate cell #2 and the TA of the candidate cell #1 are the same.

For S1413 and S1414, refer to the steps corresponding to FIG. 3 and FIG. 9.

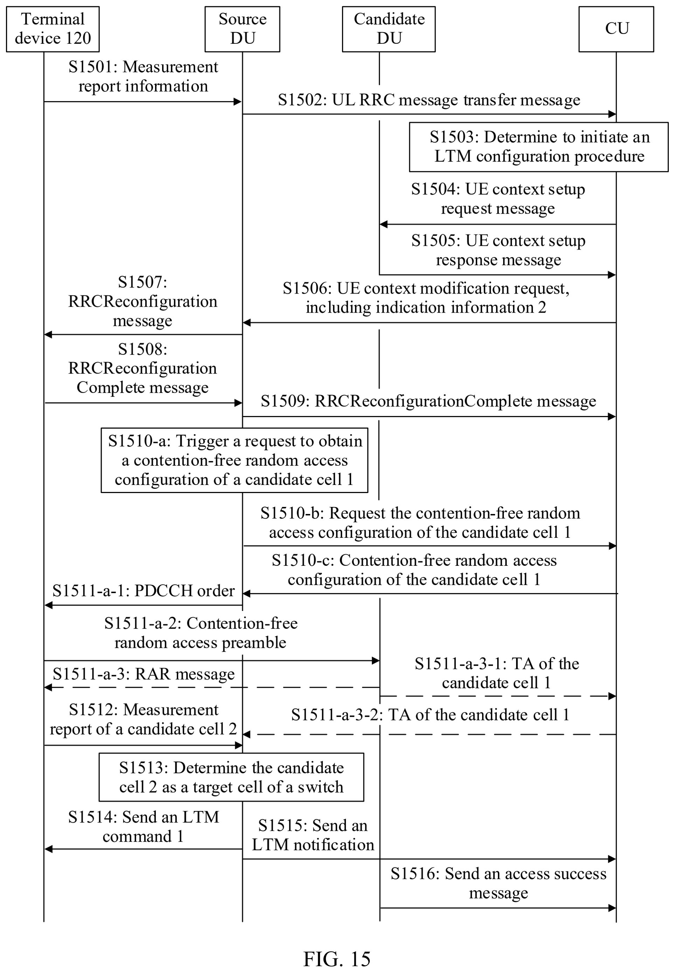

For example, in a procedure shown in FIG. 15, in an inter-DU scenario, a source DU requests a CFRA resource of a candidate cell #1 from a candidate DU based on indication information (indicating to determine a TA of a candidate cell #2 based on the candidate cell #1) of a manner of determining the TA of the candidate cell #2. For a manner in which the source DU obtains the indication information, refer to the descriptions in FIG. 12 to FIG. 14. FIG. 15 includes the following steps.

For S1501 to S1504, refer to the steps corresponding to FIG. 3 and FIG. 10.

S1505: The candidate DU determines not to provide a CFRA configuration for the candidate cell #1 and not to provide a CFRA configuration for the candidate cell #2.

A UE context setup response message of the candidate cell #1 does not carry the LTM CFRA configuration of the candidate cell #1, and a UE context setup response message of the candidate cell #2 does not carry the LTM CFRA configuration of the candidate cell #2. However, the response message of the candidate cell #1 or the candidate cell #2 includes first indication information, where the first indication information is indication information indicating that TAs of a terminal device in the candidate cell #1 and the candidate cell #2 may be the same.

The response message of the candidate cell #1 and the response message of the candidate cell #2 each may further include second indication information, where the second indication information is used for frequency information (for example, BWP information) corresponding to a random access configuration of the candidate cell #1 and/or a random access configuration of the candidate cell #2.

It may be understood that the UE context setup response message of the candidate cell #1 includes a configuration of the candidate cell #1, but the configuration includes a configuration of an LTM cell, and excludes the LTM CFRA configuration; and the UE context setup response message of the candidate cell #2 includes a configuration of the candidate cell #2, but the configuration includes a configuration of an LTM cell, and excludes the LTM CFRA configuration.

S1506: A CU sends an RRC reconfiguration to the source DU, where the RRC reconfiguration includes the configurations (UE configurations) of the candidate cell #1 and the candidate cell #2 and the first indication information.

Optionally, the RRC reconfiguration may further include the second indication information of the candidate cell #1 and the candidate cell #2.

For S1507 to S1509, refer to the steps corresponding to FIG. 3 and FIG. 10.

S1510-a: The source DU determines, based on the first indication information and/or the second indication information, to send a request to the candidate DU, where the request is used to request the candidate DU to provide the LTM CFRA configuration of the candidate cell #1.

If a frequency of a source cell of the UE and a frequency of the candidate cell #1 are the same, the source DU may determine to request the LTM CFRA configuration of the candidate cell #1. It may be understood that the frequency of the source cell and a frequency of the candidate cell #2 may be different.

S1510-b: The source DU sends the request to the candidate DU, where the request is used to request the candidate DU to provide the LTM CFRA configuration of the candidate cell #1.

S1510-c: The source DU receives the LTM CFRA configuration of the candidate cell #1 from the candidate DU.

S1511-a-1: The source DU determines, based on the LTM CFRA configuration of the candidate cell #1, to trigger a PDCCH order, to indicate the terminal device 120 to send an LTM CFRA preamble to the candidate cell #1.

The PDCCH order includes indication information of the LTM contention-free random access preamble and indication information of a time-frequency resource.

S1511-a-2: The terminal device 120 sends the contention-free random access preamble to the candidate DU in the candidate cell #1 based on the PDCCH order.

The candidate DU determines the TA of the candidate cell #1 based on the contention-free random access preamble.

In S1511-a-3-1 and S1511-a-3-2, the candidate DU sends the TA of the candidate cell #1 to the source DU, and the CU may forward the TA of the candidate cell #1 to the source DU.

The source DU determines the TA of the candidate cell #2 based on the first indication information and the TA of the candidate cell #1. The TA of the candidate cell #2 and the TA of the candidate cell #1 are the same, in other words, TA values are the same.

S1511-a-3: The candidate DU sends an RAR to the terminal device 120, where the RAR carries the TA (for example, an absolute TA value) of the candidate cell #1.

After S1511-a-2, S1511-a-3-1 and S1511-a-3-2 may be performed, or S1511-a-3 may be performed.

S1512: The terminal device 120 sends a measurement report of the candidate cell #2 to the source DU, where the measurement report includes an RSRP of the candidate cell #2.

S1513: The source DU determines the candidate cell 2 as a target cell of a switch.

S1514: The source DU sends an LTM command to the terminal device 120, where the command includes an identifier of the candidate cell #2 (a cell index), and optionally, may further include TA indication information (for example, TA info).

The TA indication information may include a solution 1 and a TA value (the TA value and a TA value of the candidate cell #1 are the same), or a solution 2 and an identifier of the candidate cell #1 (for example, the identifier of the candidate cell #1 indicates that the TA of the candidate cell #2 is determined based on the TA of the candidate cell #1, a network device considers that the TA values of the two cells are the same, and further, the UE is also known that the TA values of the two cells are the same).

The solution 1 is applicable to a scenario in which S1610-a-3-1 and S1610-a-3-1 are performed, and the solution 2 is applicable to a scenario in which S1610-a-3 is performed. The TA of the candidate cell #2 and the TA of the candidate cell #1 are the same.

For S1515 and S1516, refer to the steps corresponding to FIG. 3 and FIG. 10.

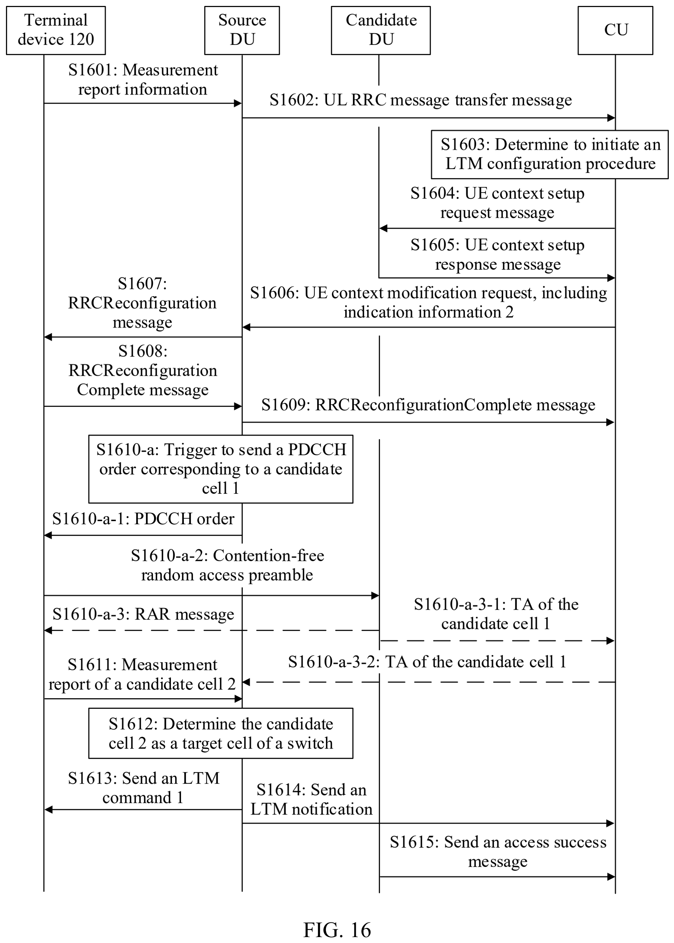

For example, in a procedure shown in FIG. 16, in an inter-DU scenario, a source DU selects an appropriate candidate cell based on frequency information of a source serving cell and a candidate cell, to send a PDCCH order to a terminal device 120.

For S1601 to S1604, refer to the steps corresponding to FIG. 3 and FIG. 10.

S1605: A candidate DU determines to provide a CFRA configuration for a candidate cell #1 and provide a CFRA configuration for a candidate cell #2.

The LTM CFRA of the candidate cell #1 is carried in a UE context setup response message of the candidate cell #1, and the LTM CFRA of the candidate cell #2 is carried in a UE context setup response message of the candidate cell #2. Further, the response message of the candidate cell #1 or the candidate cell #2 includes first indication information, where the first indication information indicates that TAs of the terminal device in the candidate cell #1 and the candidate cell #2 may be the same. Optionally, the response message of the candidate cell #1 and the response message of the candidate cell #2 each further include second indication information, where the second indication information is used for frequency information (for example, BWP information) corresponding to a random access configuration of the candidate cell #1 and/or a random access configuration of the candidate cell #2.

It may be understood that the UE context setup response message of the candidate cell #1 includes a configuration of the candidate cell #1, but the configuration includes a configuration of an LTM cell and the LTM CFRA configuration; and the UE context setup response message of the candidate cell #2 includes a configuration of the candidate cell #2, but the configuration includes a configuration of an LTM cell and the LTM CFRA configuration.

S1606: A CU sends an RRC reconfiguration to the source DU, where the RRC reconfiguration includes the configurations of the candidate cell #1 and the candidate cell #2 and the first indication information.

Optionally, the RRC reconfiguration may further include the second indication information of the candidate cell #1 and the candidate cell #2.

For S1607 to S1609, refer to the steps corresponding to FIG. 3 and FIG. 10.

S1610-a: The source DU determines, based on a frequency of the source cell and a frequency of the candidate cell, to initiate random access to the candidate cell #1. In other words, the source DU triggers sending of a PDCCH order corresponding to the candidate cell 1.

If the frequency of the source cell of the UE and a frequency of the candidate cell #1 are the same, the source DU may determine to initiate random access to the candidate cell #1. It may be understood that the frequency of the source cell and a frequency of the candidate cell #2 may be different.

S1610-a-1: The source DU determines, based on the LTM CFRA configuration of the candidate cell #1, to trigger the PDCCH order, to indicate the terminal device 120 to send an LTM CFRA preamble to the candidate cell #1.

The PDCCH order includes indication information of the LTM contention-free random access preamble and indication information of a time-frequency resource.

S1610-a-2: The terminal device 120 sends the contention-free random access preamble to the candidate DU in the candidate cell #1 based on the PDCCH order.

The candidate DU determines a TA of the candidate cell #1 based on the contention-free random access preamble.

In S1610-a-3-1 and S1610-a-3-2, the candidate DU sends the TA of the candidate cell #1 to the source DU, and the CU may forward the TA of the candidate cell #1 to the source DU. The source DU determines a TA of the candidate cell #2 based on the indication information and the TA of the candidate cell #1. The TA of the candidate cell #2 and the TA of the candidate cell #1 are the same, in other words, TA values are the same.

S1610-a-3: The candidate DU sends an RAR to the terminal device 120, where the RAR carries the TA (an absolute TA value) of the candidate cell #1.

After S1610-a-2, S1610-a-3-1 and S1610-a-3-2 may be performed, or S1610-a-3 may be performed.

S1611: The terminal device 120 sends a measurement report of the candidate cell #2 to the source DU, where the measurement report includes an RSRP of the candidate cell #2.

S1612: The source DU determines the candidate cell 2 as a target cell of a switch.

S1613: The source DU sends an LTM command to the terminal device 120, where the command includes an identifier of the candidate cell #2 (a cell index), and optionally, may further include TA indication information (for example, TA info).

The TA indication information may include a solution 1 and a TA value (the TA value and a TA value of the candidate cell #1 are the same), or a solution 2 and an identifier of the candidate cell #1 (for example, the identifier of the candidate cell #1 indicates that the TA of the candidate cell #2 is determined based on the TA of the candidate cell #1, a network device considers that the TA values of the two cells are the same, and further, the UE is also known that the TA values of the two cells are the same).

The solution 1 is applicable to a scenario in which S1610-a-3-1 and S1610-a-3-2 are performed, and the solution 2 is applicable to a scenario in which S1610-a-3 is performed. The TA of the candidate cell #2 and the TA of the candidate cell #1 are the same.

For S1614 and S1615, refer to the steps corresponding to FIG. 3 and FIG. 10.

It should be noted that similar expressions in FIG. 8 to FIG. 16 may be mutually referenced.

The foregoing describes the method embodiments in embodiments of this application, and the following describes corresponding apparatus embodiments.

To implement functions in the methods provided in embodiments of this application, a terminal and a network device each may include a hardware structure and/or a software module, to implement the functions in a form of the hardware structure, the software module, or a combination of the hardware structure and the software module. Whether a function in the functions is performed in a manner of the hardware structure, the software module, or the combination of the hardware structure and the software module depends on particular applications and design constraints of the technical solutions.

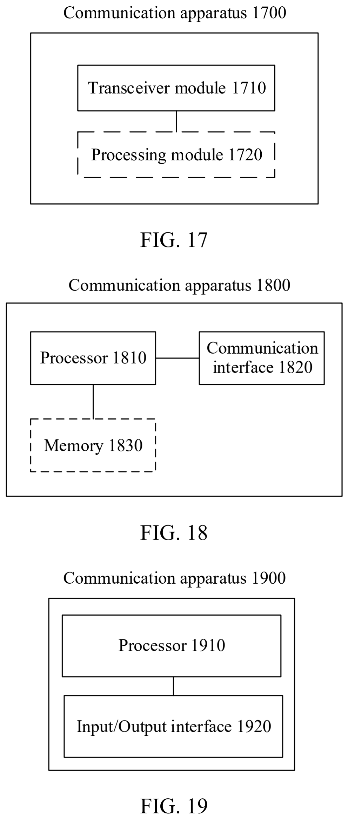

FIG. 17 is a block diagram of a communication apparatus 1700 according to an embodiment of this application. The communication apparatus 1700 may be the network device (for example, the access network device) or the terminal device in the foregoing embodiment, or may be a chip or module in the network device or the terminal device, and is configured to implement the method in the foregoing embodiment. The communication apparatus 1700 includes a transceiver module 1710. The following describes the transceiver module 1710 by using an example.

The transceiver module 1710 may include a sending module and a receiving module that are respectively configured to implement a sending function or a receiving function in the foregoing method embodiments. The transceiver module 1710 may further include a processing module, configured to implement a function other than sending or receiving.

When the communication apparatus 1700 is configured to implement a function of the network device, for example, the transceiver module 1710 is configured to receive a contention-free random access preamble 1 in a candidate cell 1. The transceiver module 1710 is further configured to send an identifier of a target cell of a switch, TA information of the target cell, and the like to a terminal device.

Optionally, the communication apparatus 1700 may further include a processing module 1720, configured to perform a function other than receiving and sending functions, for example, determine a TA of the candidate cell 1 based on the contention-free random access preamble 1 of the candidate cell 1.

Optionally, the communication apparatus 1700 further includes a storage module 1730 (which is not shown in FIG. 17), configured to store a program or code used to perform the foregoing method.

The content is merely used as an example for description. When the communication apparatus 1700 is configured to implement a function of the network device, the communication apparatus 1700 is responsible for performing the method or steps related to the network device in the foregoing method embodiment.

The communication apparatus 1700 is a terminal device. For example, the transceiver module 1710 is configured to receive a TA of a candidate cell 1. The transceiver module 1710 is further configured to receive an identifier of a target cell of a switch and identification information of the candidate cell 1.

It should be understood that when the communication apparatus 1700 is the terminal device, the transceiver module 1710 may be a module that is in a control unit/subscriber unit/distributed unit of the terminal device and that is configured to implement receiving and sending functions.

Optionally, the communication apparatus 1700 may further include a processing module 1720, configured to perform a function other than receiving and sending functions, and the like.

Optionally, the communication apparatus 1700 further includes a storage module 1730 (which is not shown in FIG. 17), configured to store a program or code used to perform the foregoing method.

The content is merely used as an example for description. When the communication apparatus 1700 is configured to implement a function of the terminal device, the communication apparatus 1700 is responsible for performing the method or steps related to the terminal device in the foregoing method embodiment.

In addition, for implementation of each operation in FIG. 17, refer to corresponding descriptions of the content shown in the foregoing method embodiment. Details are not described herein again.

FIG. 18 is a block diagram of a communication apparatus 1800 according to an embodiment of this application. The communication apparatus 1800 includes a processor 1810 and a communication interface 1820. The processor 1810 and the communication interface 1820 can be connected to each other through a bus 1840 (which is not shown in FIG. 18). The communication apparatus 1800 can be configured to implement a function of the terminal device, and can also be configured to implement a function of the network device.

Optionally, the communication apparatus 1800 further includes a memory 1830.

The memory 1830 includes but is not limited to a random access memory (random access memory, RAM), a read-only memory (read-only memory, ROM), an erasable programmable read-only memory (erasable programmable read-only memory, EPROM), or a portable read-only memory (compact disc read-only memory, CD-ROM). The memory is any other medium that can be configured to carry or store expected program code in a form of an instruction or a data structure and that can be accessed by a computer, but is not limited thereto. For example, the memory 1830 is configured to store related instructions and data.

In embodiments of this application, the processor may be a general-purpose processor, a digital signal processor, an application-specific integrated circuit, a field programmable gate array or another programmable logic device, a discrete gate or transistor logic device, or a discrete hardware component, and may implement or execute the methods, steps, and logical block diagrams disclosed in embodiments of this application. The general-purpose processor may be a microprocessor or any conventional processor or the like. The steps of the method disclosed with reference to embodiments of this application may be directly completed by a hardware processor, or may be completed by using a combination of hardware in the processor and a software module. For example, the processor 1810 may be one or more central processing units (central processing unit, CPU). When the processor 1810 is one CPU, the CPU may be a single-core CPU, or may be a multi-core CPU.

When the communication apparatus 1800 is configured to implement the function of the terminal device, for example, the processor 1810 is configured to perform the following operations: receiving TA information of a candidate cell 1; and receiving an identifier of a target cell of a switch and identification information of the candidate cell 1.

The content is merely used as an example for description. When the communication apparatus 1800 is configured to implement the function of the terminal device, the communication apparatus 1800 is responsible for performing the method or steps related to the terminal device in the foregoing method embodiment.

When the communication apparatus 1800 is configured to implement the function of the network device, for example, the processor 1810 is configured to perform the following operations: receiving a contention-free random access preamble in a candidate cell 1; and sending an identifier of a target cell of a switch and timing advance TA information of the target cell to a terminal device.

The content is merely used as an example for description. When the communication apparatus 1800 is configured to implement the function of the network device, the communication apparatus 1800 is responsible for performing the method or steps related to the network device in the foregoing method embodiment.

The foregoing descriptions are merely examples. For specific content, refer to the content shown in the method embodiment. In addition, for implementation of each operation in FIG. 18, refer to the corresponding descriptions of the method embodiments shown in FIG. 3 to FIG. 16.

The communication apparatuses shown in FIG. 17 and FIG. 18 are configured to implement the content described in the foregoing method embodiments. Therefore, for specific execution steps and methods of the communication apparatuses shown in FIG. 12 and FIG. 18, refer to the content described in the foregoing method embodiments.

It should be understood that the foregoing transceiver module may include a sending module and a receiving module. The sending module is configured to perform a sending action of the communication apparatus, and the receiving module is configured to perform a receiving action of the communication apparatus. For ease of description, the sending module and the receiving module are combined into one transceiver module in embodiments of this application. Unified descriptions are provided herein. Details are not described below again.

FIG. 19 is a diagram of a communication apparatus 1900 according to an embodiment of this application. The communication apparatus 1900 may be configured to implement a function of the network device or the terminal device in the foregoing method. The communication apparatus 1900 may be a chip in the network device or the terminal device. The communication apparatus 1900 includes an input/output interface 1920 and a processor 1910. The input/output interface 1920 may be an input/output circuit. The processor 1910 may be a signal processor, a chip, or another integrated circuit that can implement the methods in this application. The input/output interface 1920 is configured to input or output a signal or data.

For example, when the communication apparatus 1900 is a terminal device, the input/output interface 1920 is configured to receive configuration information from a network device. The input/output interface 1920 is further configured to receive TA information of a candidate cell 1. The input/output interface 1920 receives an identifier of a target cell of a switch and identification information of the candidate cell 1. The processor 1910 is further configured to perform some or all of steps of any method provided in this application.

For example, when the communication apparatus 1900 is a network device, the input/output interface 1920 is configured to receive a contention-free random access preamble in a candidate cell 1. The input/output interface 1920 is further configured to send an identifier of a target cell of a switch and timing advance TA information of the target cell to a terminal device.

In a possible implementation, the processor 1910 executes instructions stored in a memory, to implement the function implemented by the first communication apparatus or the network device.

Optionally, the communication apparatus 1900 further includes the memory. Optionally, the processor and the memory are integrated together. Optionally, the memory is outside the communication apparatus 1900.

In a possible implementation, the processor 1910 may be a logic circuit, and the processor 1910 inputs/outputs a message or signaling via the input/output interface 1920. The logic circuit may be a signal processor, a chip, or another integrated circuit that can implement the methods in embodiments of this application.

The foregoing descriptions of the communication apparatus 1900 in FIG. 19 are merely an example for description. The communication apparatus 1900 can be configured to perform the methods in the foregoing embodiments. For specific content, refer to the descriptions in the foregoing method embodiments. Details are not described herein again.

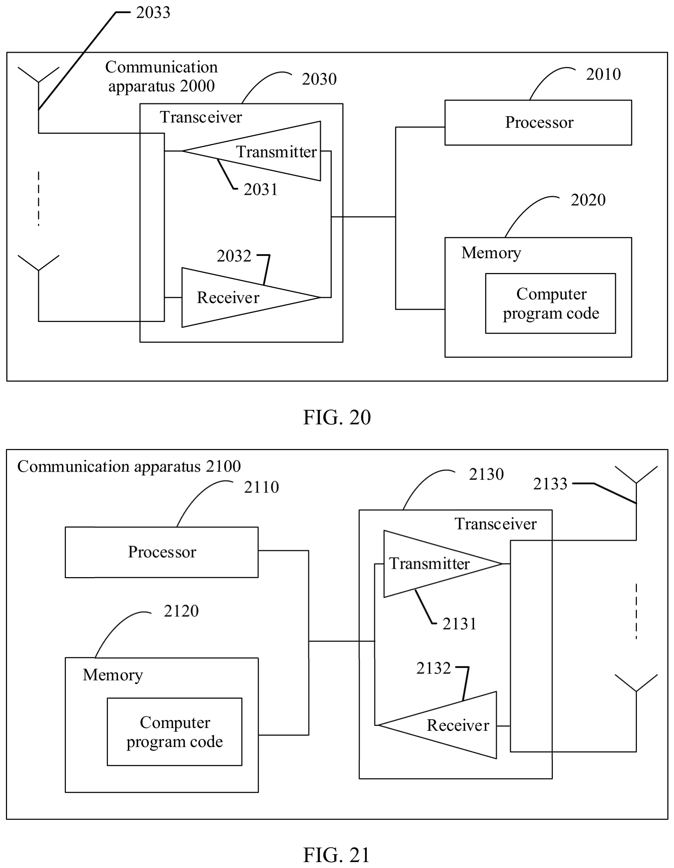

FIG. 20 is a block diagram of a communication apparatus 2000 according to an embodiment of this application. The communication apparatus 2000 may be a network device, or may be a chip. The communication apparatus 2000 may be configured to perform the foregoing operations performed by the network device.

When the communication apparatus 2000 is a network device, for example, a base station, FIG. 20 is a diagram of a simplified structure of the base station. The base station includes a module 2010, a module 2020, and a module 2030. The module 2010 is mainly configured to: perform baseband processing, control the base station, and the like. The module 2010 is usually a control center of the base station, may be usually referred to as a processor, and is configured to control the base station to perform a processing operation on a network device side in the foregoing method embodiments. The module 2020 is mainly configured to store computer program code and data. The module 2030 is mainly configured to receive and send a radio frequency signal and perform conversion between the radio frequency signal and a baseband signal. The module 2030 may be usually referred to as a transceiver module, a transceiver machine, a transceiver circuit, a transceiver, or the like. A transceiver module in the module 2030 may also be referred to as a transceiver machine, a transceiver, or the like, and includes an antenna 2033 and a radio frequency circuit (which is not shown in FIG. 20), where the radio frequency circuit is mainly configured to perform radio frequency processing. Optionally, a component that is configured to implement a receiving function and that is in the module 2030 may be considered as a receiver, and a component configured to implement a sending function may be considered as a transmitter. In other words, the module 2030 includes a receiver 2032 and a transmitter 2031. The receiver may also be referred to as a receiving module, a receiver machine, a receiver circuit, or the like, and the transmitter may be referred to as a transmitting module, a transmitter machine, a transmitter circuit, or the like.

The module 2010 and the module 2020 may include one or more boards, and each board may include one or more processors and one or more memories. The processor is configured to read and execute a program in the memory, to implement a baseband processing function and control the base station. If there are a plurality of boards, the boards may be interconnected with each other to enhance a processing capability. In an optional implementation, the plurality of boards may share one or more processors, the plurality of boards share one or more memories, or the plurality of boards share one or more processors at the same time.

In an implementation, the transceiver module in the module 2030 is configured to perform a receiving and sending-related process performed by the network device in the embodiments shown in FIG. 3 to FIG. 16. The processor in the module 2010 is configured to perform a processing-related process performed by the network device in the embodiments shown in FIG. 3 to FIG. 16.

In another implementation, the processor in the module 2010 is configured to perform a processing-related process performed by the network device in the embodiments shown in FIG. 3 to FIG. 16.

In another implementation, the transceiver module in the module 2030 is configured to perform a receiving and sending-related process performed by the network device in the embodiments shown in FIG. 3 to FIG. 16.

It should be understood that FIG. 20 is merely an example rather than a limitation, and the foregoing network device including the processor, the memory, and the transceiver may not depend on the structures shown in FIG. 12 to FIG. 14.

When the communication apparatus 2000 is a chip, the chip includes a transceiver, a memory, and a processor. The transceiver may be an input/output circuit or a communication interface. The processor is a processor, a microprocessor, or an integrated circuit integrated on the chip. A sending operation performed by the network device in the foregoing method embodiments may be understood as output of the chip, and a receiving operation performed by the network device in the foregoing method embodiments may be understood as input of the chip.

FIG. 21 is a block diagram of a communication apparatus 2100 according to an embodiment of this application. The communication apparatus 2100 may be a terminal device, a processor of the terminal device, or a chip. The communication apparatus 2100 may be configured to perform an operation performed by the terminal device in the foregoing method embodiments.

When the communication apparatus 2100 is the terminal device, FIG. 21 is a diagram of a simplified structure of the terminal device. As shown in FIG. 21, the terminal device includes a processor, a memory, and a transceiver. The memory may store computer program code. The transceiver includes a transmitter 2131, a receiver 2132, a radio frequency circuit (which is not shown in FIG. 21), an antenna 2133, and an input/output apparatus (which is not shown in FIG. 21).

The processor is mainly configured to: process a communication protocol and communication data, control the terminal device, execute a software program, process data of the software program, and the like. The memory is mainly configured to store the software program and data. The radio frequency circuit is mainly configured to: perform conversion between a baseband signal and a radio frequency signal, and process the radio frequency signal. The antenna is mainly configured to receive and send a radio frequency signal in a form of an electromagnetic wave. The input/output apparatus, for example, a touchscreen, a display, or a keyboard, is mainly configured to receive data input by a user and output data to the user. It should be noted that some types of terminal devices may have no input/output apparatus.

When needing to send data, after performing baseband processing on the to-be-sent data, the processor outputs a baseband signal to the radio frequency circuit; and the radio frequency circuit performs radio frequency processing on the baseband signal and then sends the radio frequency signal to the outside in a form of an electromagnetic wave through the antenna. When data is sent to the terminal device, the radio frequency circuit receives the radio frequency signal through the antenna, converts the radio frequency signal into a baseband signal, and outputs the baseband signal to the processor. The processor converts the baseband signal into data, and processes the data. For ease of description, FIG. 21 merely shows one memory, one processor, and one transceiver. An actual terminal device product may include one or more processors and one or more memories. The memory may also be referred to as a storage medium, a storage device, or the like. The memory may be disposed independent of the processor, or may be integrated with the processor. This is not limited in embodiments of this application.

In this embodiment of this application, the antenna and the radio frequency circuit that have sending and receiving functions may be considered as a transceiver module of the terminal device, and the processor that has a processing function may be considered as a processing module of the terminal device.

As shown in FIG. 21, the terminal device includes a processor 2110, a memory 2120, and a transceiver 2130. The processor 2110 may also be referred to as a processing unit, a processing board, a processing module, a processing apparatus, or the like, and the transceiver 2130 may also be referred to as a transceiver unit, a transceiver machine, a transceiver apparatus, or the like.

Optionally, a component that is in the transceiver 2130 and that is configured to implement a receiving function may be considered as a receiving module, and a component that is in the transceiver 2130 and that is configured to implement a sending function may be considered as a sending module. That is, the transceiver 2130 includes a receiver and a transmitter. The transceiver may also be sometimes referred to as a transceiver machine, a transceiver module, a transceiver circuit, or the like. The receiver may also be sometimes referred to as a receiver machine, a receiving module, a receiver circuit, or the like. The transmitter may also be sometimes referred to as a transmitter machine, a transmitting module, a transmitter circuit, or the like.

For example, in an implementation, the processor 2110 is configured to perform a processing action on a terminal device side in embodiments shown in FIG. 3 to FIG. 16, and the transceiver 2130 is configured to perform receiving and sending actions on the terminal device side in FIG. 3 to FIG. 16.

For example, in an implementation, the processor 2110 is configured to perform a processing action on a terminal device side in embodiments shown in FIG. 3 to FIG. 16, and the transceiver 2130 is configured to perform receiving and sending actions on the terminal device side in FIG. 3 to FIG. 16.

It should be understood that FIG. 21 is merely an example rather than a limitation. The terminal device including the transceiver module and the processing module may not depend on the structures shown in FIG. 17 to FIG. 19.

When the communication apparatus 2100 is the chip, the chip includes a processor, a memory, and a transceiver. The transceiver may be an input/output circuit or a communication interface. The processor may be a processing module, a microprocessor, or an integrated circuit integrated on the chip. A sending operation performed by the terminal device in the foregoing method embodiments may be understood as output of the chip, and a receiving operation performed by the terminal device in the foregoing method embodiments may be understood as input of the chip.

This application further provides a chip, including a processor, configured to invoke instructions from a memory and run the instructions stored in the memory, so that a communication device on which the chip is installed is enabled to perform the methods in the foregoing examples.

This application further provides another chip, including an input interface, an output interface, and a processor. The input interface, the output interface, and the processor are connected through an internal connection path. The processor is configured to execute code in a memory, and when the code is executed, the processor is configured to perform the methods in the foregoing examples. Optionally, the chip further includes the memory, and the memory is configured to store a computer program or the code.

This application further provides a processor, configured to be coupled to a memory, and configured to perform a method and a function of the network device or the terminal device in any one of the foregoing embodiments.

Another embodiment of this application provides a computer program product including instructions. When the computer program product runs on a computer, the method in the foregoing embodiment is implemented.

This application further provides a computer program. When the computer program is run in a computer, the method in the foregoing embodiment is implemented.

Another embodiment of this application provides a computer-readable storage medium. The computer-readable storage medium stores a computer program. When the computer program is executed by a computer, the method in the foregoing embodiment is implemented.

In the descriptions of embodiments of this application, unless otherwise specified, "a plurality of" means two or more. "At least one of the following items (pieces)" or a similar expression thereof means any combination of these items, including a single item (piece) or any combination of a plurality of items (pieces). For example, at least one item (piece) of a, b, or c may indicate: a, b, c, a and b, a and c, b and c, or a, b, and c, where a, b, and c may be singular or plural.

In addition, to clearly describe the technical solutions in embodiments of this application, terms such as "first" and "second" are used in embodiments of this application to distinguish between same items or similar items that provide basically same functions or purposes. A person skilled in the art may understand that the terms such as "first" and "second" do not limit a quantity or an execution sequence, and the terms such as "first" and "second" do not indicate a definite difference. In addition, in embodiments of this application, words such as "example" or "for example" are used to represent an example or a description.

In descriptions of embodiments of this application, unless otherwise specified, "/" represents an "or" relationship between associated objects. For example, A/B may represent A or B. In this application, "and/or" describes only an association relationship between associated objects, and represents that three relationships may exist. For example, A and/or B may represent the following three cases: Only A exists, both A and B exist, and only B exists, where A and B may be singular or plural.

Sequence numbers of the foregoing processes do not mean execution sequences in embodiments of this application. The execution sequences of the processes should be determined based on functions and internal logic of the processes, and should not be construed as any limitation on implementation processes of embodiments of this application.

A person of ordinary skill in the art may be aware that, in combination with the examples described in embodiments disclosed in this specification, units and algorithm steps can be implemented by electronic hardware or a combination of computer software and electronic hardware. Whether the functions are performed by hardware or software depends on particular applications and design constraints of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiment is merely an example. For example, division into the units is merely logical function division and may be other division in actual implementation. For example, a plurality of units or components may be combined or integrated into another system, or some features may be ignored or not performed.

In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, in other words, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each unit may exist alone physically, or two or more units may be integrated into one unit.

When functions are implemented in a form of a software functional unit and sold or used as an independent product, the functions may be stored in a computer-readable storage medium. Based on such an understanding, the technical solutions in embodiments of this application essentially, or the part contributing to the conventional technology, or some of the technical solutions may be implemented in a form of a software product. The computer software product is stored in a storage medium, and includes several instructions for instructing a computer device (which may be a personal computer, a server, a network device, or the like) to perform all or some of the steps of the methods in embodiments of this application. The foregoing storage medium includes any medium that can store program code, for example, a USB flash drive, a removable hard disk, a ROM, a RAM, a magnetic disk, or an optical disc.

Mutual reference may be made to content in embodiments of this application. Unless otherwise specified or a logical conflict occurs, terms and/or descriptions in different embodiments are consistent and may be mutually referenced, and technical features in different embodiments may be combined into a new embodiment based on an internal logical relationship between the technical features.

It may be understood that, in embodiments of this application, the terminal device and the network device may perform some or all of steps in embodiments of this application. These steps or operations are merely examples. In embodiments of this application, other operations or variations of various operations may be further performed. In addition, the steps may be performed in a sequence different from a sequence shown in embodiments of this application, and not all of operations in embodiments of this application may be performed.

## Claims

1. A communication method, wherein the method is applied to a terminal device or a chip in the terminal device, and comprises:
receiving a timing advance TA of a first candidate cell; and
receiving an identifier of a target cell of a switch and identification information of the first candidate cell, wherein the target cell is a second candidate cell, and the identification information of the first candidate cell indicates to determine a TA of the target cell based on the TA of the first candidate cell.

2. The method according to claim 1, wherein the method further comprises:
sending a measurement report of the second candidate cell.

3. The method according to claim 1 or 2, wherein the method further comprises:
receiving indication information, wherein the indication information indicates to send a contention-free random access preamble in the first candidate cell, and the contention-free random access preamble is used to determine the TA of the first candidate cell; and
sending the contention-free random access preamble in the first candidate cell based on the indication information.

4. The method according to any one of claims 1 to 3, wherein
the first candidate cell and the second candidate cell belong to a first network device, and the first candidate cell is different from the second candidate cell.

5. The method according to any one of claims 1 to 4, wherein the TA of the first candidate cell and the TA of the target cell are the same.

6. The method according to any one of claims 1 to 5, wherein the first candidate cell and the second candidate cell belong to a set of candidate target cells of the switch.

7. A communication method, comprising:
receiving, by a first network device, a contention-free random access preamble of a first candidate cell; and
sending, by the first network device, an identifier of a target cell of a switch and timing advance TA information of the target cell to a terminal device, wherein
the target cell is a second candidate cell, and the TA information of the target cell is determined based on the contention-free random access preamble of the first candidate cell.

8. The method according to claim 7, wherein the TA information of the target cell comprises at least one of the following:
a TA of the target cell or identification information of the first candidate cell, wherein the identification information of the first candidate cell indicates to determine the TA of the target cell based on the first candidate cell.

9. The method according to claim 7 or 8, wherein the method further comprises:
sending, by the first network device, indication information to the terminal device, wherein the indication information indicates to send the contention-free random access preamble in the first candidate cell; and
the indication information comprises contention-free random access configuration information of the first candidate cell, and the contention-free random access configuration information is used for transmission of the contention-free random access preamble.

10. The method according to claim 9, wherein the method further comprises:
sending, by the first network device, configuration information of the first candidate cell and configuration information of the second candidate cell to the terminal device.

11. The method according to any one of claims 7 to 10, wherein
the first candidate cell and the second candidate cell belong to the first network device, and the first candidate cell is different from the second candidate cell.

12. The method according to any one of claims 7 to 11, wherein a TA of the first candidate cell and the TA of the target cell are the same.

13. The method according to any one of claims 7 to 12, wherein the first candidate cell and the second candidate cell belong to a set of candidate target cells of the switch.

14. A communication method, comprising:
receiving, by a first network device, first indication information from a second network device, wherein the first indication information indicates to determine a timing advance TA of a second candidate cell based on a first candidate cell, and the first candidate cell and the second candidate cell belong to a third network device;
receiving, by the first network device, TA information of the first candidate cell; and
sending, by the first network device based on the TA information of the first candidate cell and the first indication information, an identifier of a target cell of a switch and TA information of the target cell to a terminal device, wherein the target cell is the second candidate cell.

15. The method according to claim 14, wherein the TA information of the target cell comprises at least one of the following:
a TA of the target cell or identification information of the first candidate cell, wherein the identification information of the first candidate cell indicates to determine the TA of the target cell based on the first candidate cell.

16. The method according to claim 14 or 15, wherein receiving, by the first network device, the TA information of the first candidate cell comprises:
receiving, by the first network device, the TA information of the first candidate cell from the second network device; or
receiving, by the first network device, the TA information of the first candidate cell from the terminal device.

17. The method according to any one of claims 14 to 16, wherein the TA information of the first candidate cell comprises at least one of the following:
a TA of the first candidate cell or second indication information, wherein the second indication information indicates that at least one of the third network device and the terminal device has the TA of the first candidate cell.

18. The method according to any one of claims 14 to 17, wherein
the first indication information indicates to determine the TA of the second candidate cell based on the TA of the first candidate cell; or
the first indication information indicates to determine the TA of the second candidate cell based on contention-free random access configuration information of the first candidate cell.

19. The method according to any one of claims 14 to 18, wherein the method further comprises:
sending, by the first network device, third indication information to the terminal device, wherein the third indication information indicates to send a contention-free random access preamble in the first candidate cell, and the contention-free random access preamble is used to determine the TA of the first candidate cell.

20. The method according to claim 19, wherein the method further comprises:
receiving, by the first network device, frequency information of the first candidate cell and frequency information of the second candidate cell that are from the second network device; and
determining, by the first network device, the third indication information based on a frequency of the first candidate cell, a frequency of the second candidate cell, and a frequency of a serving cell.

21. The method according to claim 19, wherein the method further comprises:
receiving, by the first network device, subcarrier spacing SCS information of the first candidate cell and SCS information of the second candidate cell that are from the second network device; and
determining, by the first network device, the third indication information based on an SCS of the first candidate cell, an SCS of the second candidate cell, and an SCS of a serving cell.

22. The method according to claim 20, wherein the method further comprises:
sending, by the first network device, first request information to the second network device based on the frequency of the first candidate cell, the frequency of the second candidate cell, and the frequency of the serving cell, wherein
the first request information is used to request the contention-free random access configuration information of the first candidate cell, and the contention-free random access configuration information of the first candidate cell is used for transmission of the contention-free random access preamble.

23. The method according to claim 21, wherein the method further comprises:
sending, by the first network device, second request information to the second network device based on the SCS of the first candidate cell, the SCS of the second candidate cell, and the SCS of the serving cell, wherein
the second request information is used to request the contention-free random access configuration information of the first candidate cell, and the contention-free random access configuration information of the first candidate cell is used for transmission of the contention-free random access preamble.

24. The method according to claim 20 or 21, wherein the method further comprises:
receiving, by the first network device, the contention-free random access configuration information of the first candidate cell and contention-free random access configuration information of the second candidate cell that are from the second network device.

25. The method according to any one of claims 14 to 24, wherein the first candidate cell and the second candidate cell belong to a set of candidate target cells of the switch.

26. A communication apparatus, comprising a processor, wherein
the processor is configured to execute a computer program or instructions, or the processor is configured to enable, through a logic circuit, the communication apparatus to perform the method according to any one of claims 1 to 25.

27. The communication apparatus according to claim 26, wherein the communication apparatus further comprises a memory, and the memory is configured to store the computer program or the instructions.

28. The communication apparatus according to claim 26 or 27, wherein the communication apparatus further comprises a communication interface, and the communication interface is configured to input a signal and/or output a signal.

29. A communication apparatus, comprising a logic circuit and an input/output interface, wherein
the input/output interface is configured to input a signal and/or output a signal; and
the logic circuit is configured to perform the method according to any one of claims 1 to 25.

30. A computer-readable storage medium, wherein the computer-readable storage medium stores a computer program or instructions; and
when the computer program or the instructions are run on a computer, the method according to any one of claims 1 to 25 is performed.

31. A computer program product, comprising instructions, wherein
when the instructions are run on a computer, the method according to any one of claims 1 to 25 is performed.
